(19) **Europäisches Patentamt / European Patent Office / Office européen des brevets**

(11) **EP 3 354 029 B1**

(12) # EUROPEAN PATENT SPECIFICATION

(45) Date of publication and mention
of the grant of the patent:
**15.01.2025 Bulletin 2025/03**

(21) Application number: **16848200.8**

(22) Date of filing: **21.09.2016**

(51) International Patent Classification (IPC):
**H04N 19/597** *(2014.01)*    **H04N 19/523** *(2014.01)*
**H04N 19/30** *(2014.01)*

(52) Cooperative Patent Classification (CPC):
**H04N 19/597; H04N 19/30; H04N 19/523**

(86) International application number:
**PCT/FI2016/050653**

(87) International publication number:
**WO 2017/051072 (30.03.2017 Gazette 2017/13)**

(54) **A METHOD, AN APPARATUS AND A COMPUTER PROGRAM PRODUCT FOR CODING A 360-DEGREE PANORAMIC VIDEO**

VERFAHREN, VORRICHTUNG UND COMPUTERPROGRAMMPRODUKT ZUR CODIERUNG EINES 360-GRAD-PANORAMAVIDEOS

PROCÉDÉ, APPAREIL ET PRODUIT PROGRAMME D'ORDINATEUR PERMETTANT DE CODER UNE VIDÉO PANORAMIQUE À 360 DEGRÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2015 US 201562222366 P**

(43) Date of publication of application:
**01.08.2018 Bulletin 2018/31**

(73) Proprietor: **Nokia Technologies Oy**
**02610 Espoo (FI)**

(72) Inventor: **HANNUKSELA, Miska**
**33610 Tampere (FI)**

(74) Representative: **Berggren Oy**
**P.O. Box 16**
**Eteläinen Rautatiekatu 10A**
**00101 Helsinki (FI)**

(56) References cited:
**JP-B2- 4 258 879      JP-B2- 4 258 879**
**US-A1- 2006 034 374      US-A1- 2006 034 374**

• **No further relevant documents disclosed**

• **CHEN L. ET AL.: "Disparity-compensated Inter-layer Motion Prediction Using Standardized HEVC Extensions", IEEE INTERNATIONAL SYMPOSIUM ON CIRCUITS AND SYSTEMS (ISCAS, 24 May 2015 (2015-05-24), pages 2776 - 2779, XP055373261**
• **BOYCE J. ET AL.: "Draft high efficiency video coding (HEVC) version 2, combined format range extensions (RExt), scalability (SHVC), and multi-view (MV-HEVC) extensions", JOINT COLLABORATIVE TEAM ON VIDEO CODING (JCT-VC) OF ITU-T SG 16 WP 3 AND ISO/IEC JTC 1/SC 29/WG 11 18TH MEETING, 30 June 2014 (2014-06-30), Sapporo, JP**
• **CHEN L. ET AL.: "Disparity-compensated Inter-layer Motion Prediction Using Standardized HEVC Extensions", IEEE INTERNATIONAL SYMPOSIUM ON CIRCUITS AND SYSTEMS (ISCAS, 24 May 2015 (2015-05-24), pages 2776 - 2779, XP055373261**
• **BOYCE J. ET AL.: "Draft high efficiency video coding (HEVC) version 2, combined format range extensions (RExt), scalability (SHVC), and multi-view (MV-HEVC) extensions", JOINT COLLABORATIVE TEAM ON VIDEO CODING (JCT-VC) OF ITU-T SG 16 WP 3 AND ISO/IEC JTC 1/SC 29/WG 11 18TH MEETING, 30 June 2014 (2014-06-30), SAPPORO, JP, XP009509397**

Description

## TECHNICAL FIELD

The present embodiments relate to coding of 360-degree panoramic video.

## BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

360-degree panoramic images and video cover horizontally the full 360-degree field-of-view around the capturing position. 360-degree panoramic video content can be acquired e.g. by stitching pictures of more than one camera sensor to a single 360-degree panoramic image. Also, a single image sensor can be used with an optical arrangement to generate 360-degree panoramic image.

CHEN L. ET AL.: "Disparity-compensated Inter-layer Motion Prediction Using Standardized HEVC Extensions", was published in IEEE INTERNATIONAL SYMPOSIUM ON CIRCUITS AND SYSTEMS (ISCAS, 24 May 2015, pages 2776-2779). The document is referred to as NPL1 in the following and builds on the scalable and multiview extensions of the High Efficiency Video Coding, which share the same high-level syntax coding structure. For the scalable extension, the motion field of the inter-layer reference picture is modified through Motion Field Mapping before used for motion vector prediction. However, the motion field of the inter-layer reference picture is used without modification in the multiview extension. In NPL1, a disparity-compensated inter-layer motion prediction is proposed for multiview video coding to achieve disparity compensation in inter-layer motion prediction using the scaled reference layer offset.

The patent application US 2006/034374 A1 (PARK GWANG-HOON [KR] ET AL.) of 16 February 2006 discloses a device and a method for motion estimation and compensation to be performed on a panorama image with a 360° omni-directional view based on that a spatial relation between left and right borders of the panorama image is very high. Accordingly, it is possible to improve an image quality through effective and precise estimation and compensation for the motion of the panorama image. In particular, it is possible to improve the image quality at the right and left edges of the panorama image.

## SUMMARY

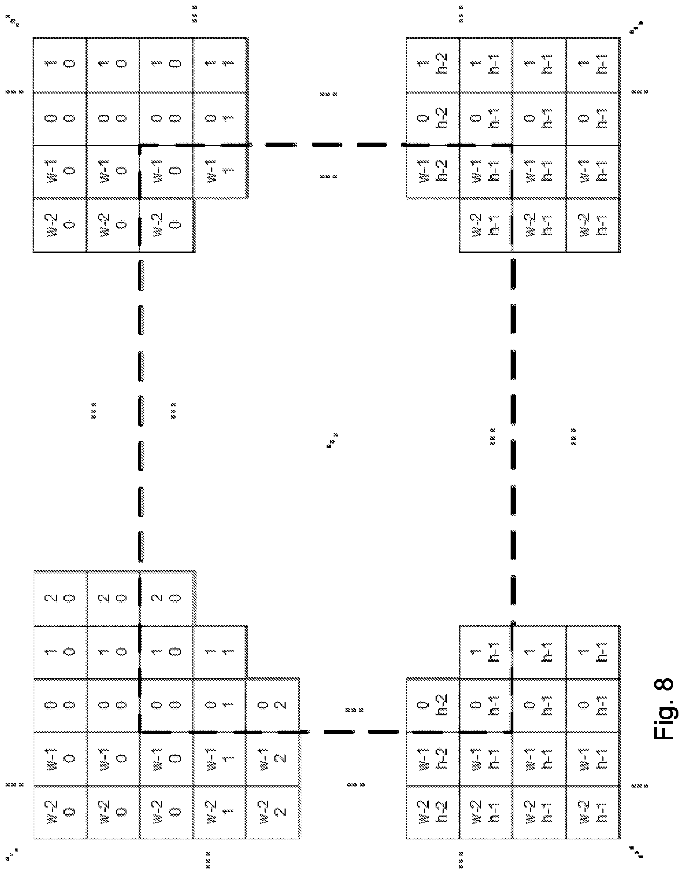

In the following, various aspects, examples and embodiments are being presented as part of the disclosure. These are provided for illustrative purposes and do not define the scope of protection being sought for the present invention, said scope being defined by the appended independent claims. Enabling disclosure to practice the protected invention is provided in the below section entitled "1. Inter-layer prediction" with embodiments referring to figure 8.

Some embodiments provide a method and an apparatus for implementing the method for encoding and decoding 360-degree panoramic video.

Various aspects of examples of the invention are provided in the detailed description.

According to a first aspect, there is provided a method comprising:

- reconstructing a 360-degree panoramic source picture for inter-layer prediction;
- deriving an inter-layer reference picture from the 360-degree panoramic source picture, wherein the deriving comprises one or both of:

  ◦ upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region;
  ◦ determining a reference region that crosses a picture boundary of the 360-degree panoramic source picture, and including in the reference region one or both of the following:

    ▪ one or more sample values of an opposite side border region;
    ▪ one or more variable values associated with one or more blocks of the opposite side border region.

According to a second aspect, there is provided a method comprises

2

- encoding samples of a border region of a 360-degree panoramic picture, wherein the encoding comprises utilizing one or both of the following

    - one or more sample values of an opposite side border region:
    - one or more variable values associated with one or more blocks of the opposite side border region

    in processing of the samples of the border region;
- wherein said processing of the samples is one or both of the following: prediction of the samples of the border region, reconstruction of the samples of the border region, and wherein the processing comprises one or more of the following:

    ○ obtaining a prediction block for intra prediction based on the one or more sample values;
    ○ filtering intermediate reconstructed samples of the border region on the basis of one or both of the following:

        - the one or more sample values of the opposite side border region;
        - the one or more variable values associated with the one or more blocks of the opposite side border region;

    o tuning context-adaptive entropy coding on the basis of one or both of the following:

        - the one or more sample values of an opposite side border region;
        - the one or more variable values associated with one or more blocks of the opposite side border region.

According to a third aspect, there is provided a method comprises

- decoding samples of a border region of a 360-degree panoramic picture, wherein the decoding comprises utilizing one or both of the following

    - one or more sample values of an opposite side border region:
    - one or more variable values associated with one or more blocks of the opposite side border region

    in processing of the samples of the border region;
- wherein said processing of the samples is one or both of the following: prediction of the samples of the border region, reconstruction of the samples of the border region, and wherein the processing comprises one or more of the following:

    ○ obtaining a prediction block for intra prediction based on the one or more sample values;
    o filtering intermediate reconstructed samples of the border region on the basis of one or both of the following:

        - the one or more sample values of the opposite side border region;
        - the one or more variable values associated with the one or more blocks of the opposite side border region;

    o tuning context-adaptive entropy decoding on the basis of one or both of the following:

        - the one or more sample values of an opposite side border region;
        - the one or more variable values associated with one or more blocks of the opposite side border region.

According to a fourth aspect, there is provided an apparatus comprising at least one processor; at least one memory including computer program code, the at least one memory and the computer program code configured to, with the at least one processor, cause the apparatus to perform at least the following:

- reconstructing a 360-degree panoramic source picture for inter-layer prediction;
- deriving an inter-layer reference picture from the 360-degree panoramic source picture, wherein the deriving comprises one or both of:

    ○ upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region;

○ determining a reference region that crosses a picture boundary of the 360-degree panoramic source picture, and including in the reference region one or both of the following:

- one or more sample values of an opposite side border region;
- one or more variable values associated with one or more blocks of the opposite side border region.

According to a fifth aspect, there is provided an apparatus comprising at least one processor; at least one memory including computer program code, the at least one memory and the computer program code configured to, with the at least one processor, cause the apparatus to perform at least the following:

- encoding samples of a border region of a 360-degree panoramic picture, wherein the encoding comprises utilizing one or both of the following

    - one or more sample values of an opposite side border region:
    - one or more variable values associated with one or more blocks of the opposite side border region

    in processing of the samples of the border region;
- wherein said processing of the samples is one or both of the following: prediction of the samples of the border region, reconstruction of the samples of the border region, and wherein the processing comprises one or more of the following:

    ○ obtaining a prediction block for intra prediction based on the one or more sample values;
    ○ filtering intermediate reconstructed samples of the border region on the basis of one or both of the following:

        - the one or more sample values of the opposite side border region;
        - the one or more variable values associated with the one or more blocks of the opposite side border region;

    ○ tuning context-adaptive entropy coding on the basis of one or both of the following:

        - the one or more sample values of an opposite side border region;
        - the one or more variable values associated with one or more blocks of the opposite side border region.

According to a sixth aspect, there is provided an apparatus comprising at least one processor; at least one memory including computer program code, the at least one memory and the computer program code configured to, with the at least one processor, cause the apparatus to perform at least the following:

- decoding samples of a border region of a 360-degree panoramic picture, wherein the decoding comprises utilizing one or both of the following

    - one or more sample values of an opposite side border region:
    - one or more variable values associated with one or more blocks of the opposite side border region

    in processing of the samples of the border region;
- wherein said processing of the samples is one or both of the following: prediction of the samples of the border region, reconstruction of the samples of the border region, and wherein the processing comprises one or more of the following:

    ○ obtaining a prediction block for intra prediction based on the one or more sample values;
    ○ filtering intermediate reconstructed samples of the border region on the basis of one or both of the following:

        - the one or more sample values of the opposite side border region;
        - the one or more variable values associated with the one or more blocks of the opposite side border region;

    ○ tuning context-adaptive entropy decoding on the basis of one or both of the following:

        - the one or more sample values of an opposite side border region;
        - the one or more variable values associated with one or more blocks of the opposite side border region.

According to a seventh aspect, there is provided an apparatus comprises

- means for processing;
- means for reconstructing a 360-degree panoramic source picture for inter-layer prediction;
- means for deriving an inter-layer reference picture from the 360-degree panoramic source picture, wherein the means for deriving is configured to perform one or both of

  ○ upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region;
  ○ determining a reference region that crosses a picture boundary of the 360-degree panoramic source picture, and including in the reference region one or both of the following:

    ▪ one or more sample values of an opposite side border region;
    ▪ one or more variable values associated with one or more blocks of the opposite side border region.

According to an eighth aspect, there is provided an apparatus comprises

- means for processing;
- means for encoding samples of a border region of a 360-degree panoramic picture, wherein the means for encoding is configured to utilize one or both of the following

    ▪ one or more sample values of an opposite side border region:
    ▪ one or more variable values associated with one or more blocks of the opposite side border region

  in processing of the samples of the border region;
- wherein said processing of the samples is one or both of the following: prediction of the samples of the border region, reconstruction of the samples of the border region, and wherein the processing comprises one or more of the following:

    ○ obtaining a prediction block for intra prediction based on the one or more sample values;
    ○ filtering intermediate reconstructed samples of the border region on the basis of one or both of the following:

      ▪ the one or more sample values of the opposite side border region;
      ▪ the one or more variable values associated with the one or more blocks of the opposite side border region;

    ○ tuning context-adaptive entropy coding on the basis of one or both of the following:

      ▪ the one or more sample values of an opposite side border region;
      ▪ the one or more variable values associated with one or more blocks of the opposite side border region.

According to a ninth aspect, there is provided an apparatus comprises

- means for processing;
- means for decoding samples of a border region of a 360-degree panoramic picture, wherein the means for decoding is configured to utilize one or both of the following

    ▪ one or more sample values of an opposite side border region:
    ▪ one or more variable values associated with one or more blocks of the opposite side border region

  in processing of the samples of the border region;
- wherein said processing of the samples is one or both of the following: prediction of the samples of the border region, reconstruction of the samples of the border region, and wherein the processing comprises one or more of the following:

    ○ obtaining a prediction block for intra prediction based on the one or more sample values;
    ○ filtering intermediate reconstructed samples of the border region on the basis of one or both of the following:

■ the one or more sample values of the opposite side border region;
■ the one or more variable values associated with the one or more blocks of the opposite side border region;

○ tuning context-adaptive entropy decoding on the basis of one or both of the following:

■ the one or more sample values of an opposite side border region;
■ the one or more variable values associated with one or more blocks of the opposite side border region.

According to a tenth aspect, there is provided a computer program product comprising a computer-readable medium bearing computer program code embodied therein for use with a computer, the computer program code comprising:

- code for reconstructing a 360-degree panoramic source picture for inter-layer prediction;
- code for deriving an inter-layer reference picture from the 360-degree panoramic source picture, wherein the deriving comprises one or both of

○ code for upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region;
○ code for determining a reference region that crosses a picture boundary of the 360-degree panoramic source picture, and including in the reference region one or both of the following:

■ one or more sample values of an opposite side border region;
■ one or more variable values associated with one or more blocks of the opposite side border region.

According to an eleventh aspect, there is provided a computer program product comprising a computer-readable medium bearing computer program code embodied therein for use with a computer, the computer program code comprising:

- code for encoding samples of a border region of a 360-degree panoramic picture, wherein the encoding comprises utilizing one or both of the following

■ one or more sample values of an opposite side border region:
■ one or more variable values associated with one or more blocks of the opposite side border region

in processing of the samples of the border region;
- wherein said processing of the samples is one or both of the following: prediction of the samples of the border region, reconstruction of the samples of the border region, and wherein the processing comprises one or more of the following:

○ code for obtaining a prediction block for intra prediction based on the one or more sample values;
○ code for filtering intermediate reconstructed samples of the border region on the basis of one or both of the following:

■ the one or more sample values of the opposite side border region;
■ the one or more variable values associated with the one or more blocks of the opposite side border region;

○ code for tuning context-adaptive entropy coding on the basis of one or both of the following:

■ the one or more sample values of an opposite side border region;
■ the one or more variable values associated with one or more blocks of the opposite side border region.

According to a twelfth aspect, there is provided a computer program product comprising a computer-readable medium bearing computer program code embodied therein for use with a computer, the computer program code comprising:

- code for decoding samples of a border region of a 360-degree panoramic picture, wherein the decoding comprises utilizing one or both of the following

- one or more sample values of an opposite side border region:
- one or more variable values associated with one or more blocks of the opposite side border region

in processing of the samples of the border region;
- wherein said processing of the samples is one or both of the following: prediction of the samples of the border region, reconstruction of the samples of the border region, and wherein the processing comprises one or more of the following:

o◦ code for obtaining a prediction block for intra prediction based on the one or more sample values;
◦ code for filtering intermediate reconstructed samples of the border region on the basis of one or both of the following:

- the one or more sample values of the opposite side border region;
- the one or more variable values associated with the one or more blocks of the opposite side border region;

◦ code for tuning context-adaptive entropy decoding on the basis of one or both of the following:

- the one or more sample values of an opposite side border region;
- the one or more variable values associated with one or more blocks of the opposite side border region.

## BRIEF DESCRIPTION OF THE DRAWINGS

For a more complete understanding of example embodiments of the present invention, reference is now made to the following descriptions taken in connection with the accompanying drawings in which:

Figure 1 illustrates a block diagram of a video coding system according to an embodiment;

Figure 2 illustrates a layout of an apparatus according to an embodiment;

Figure 3 illustrates an arrangement for video coding comprising a plurality of apparatuses, networks and network elements according to an example embodiment;

Figure 4 illustrates a block diagram of a video encoder according to an embodiment;

Figure 5 illustrates a block diagram of a video decoder according to an embodiment;

Figure 6 illustrates an example utilized in Figures 7 and 8;

Figure 7 illustrates an example of handling of referring to samples outside picture boundaries in an inter prediction process;

Figure 8 illustrates an example of handling of access to samples or motion vectors outside picture boundaries (panoramic video coding);

Figure 9 illustrates an example of luma samples at full-sample locations, said samples being used for generating the predicted luma sample value;

Figure 10 illustrates reference layer location offsets;

Figure 11 illustrates an example of a sample array with a reference region;

Figure 12 illustrates an example of reference samples used in prediction;

Figure 13 is a flowchart illustrating a method according to an embodiment; and

Figure 14 is a flowchart illustrating a method according to another embodiment.

**DETAILED DESCRIPTON OF SOME EXAMPLE EMBODIMENTS**

The present application relates to 360-panoramic video content, the amount of which is rapidly increasing due to dedicated devices and software for capturing and/or creating 360-panoramic video content.

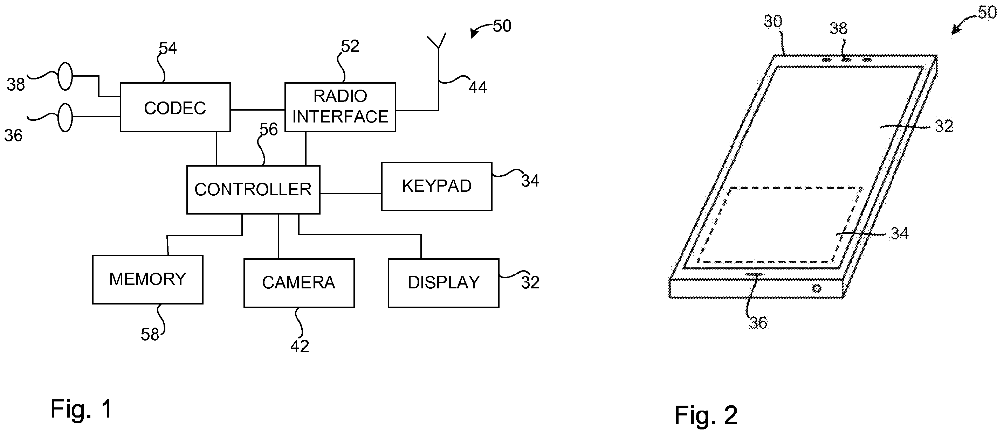

An embodiment of an apparatus for capturing and/or creating 360-panoramic video content is illustrated in Figures 1 and 2. The apparatus 50 is an electronic device for example a mobile terminal or a user equipment of a wireless communication system or a camera device. The apparatus 50 may comprise a housing 30 for incorporating and protecting the device. The apparatus 50 further may comprise a display 32, for example, a liquid crystal display or any other display technology capable of displaying images and/or videos. The apparatus 50 may further comprise a keypad 34. According to another embodiment, any suitable data or user interface mechanism may be employed. For example, the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device, which may be any of the following: an earpiece 38, a speaker or an analogue audio or digital audio output connection. The apparatus 50 may also comprise a battery (according to another embodiment, the device may be powered by any suitable mobile energy device, such as solar cell, fuel cell or clockwork generator). The apparatus may comprise a camera 42 capable of recording or capturing images and/or video, or may be connected to one. The camera 42 may be capable of capturing a 360-degree field-of-view horizontally and/or vertically for example by using a parabolic mirror arrangement with a conventional two-dimensional color image sensor or by using several wide field-of-view lenses and/or several color image sensors. The camera 42 or the camera to which the apparatus is connected may in essence comprise of several cameras. According to an embodiment, the apparatus 50 may further comprise an infrared port for short range line of sight communication to other devices. According to an embodiment, the apparatus 50 may further comprise any suitable short range communication solution such as for example a Bluetooth wireless connection or a USB/firewire wired solution.

The apparatus 50 may comprise a controller 56 or processor for controlling the apparatus. The controller 56 may be connected to memory 58 which, according to an embodiment, may store both data in the form of image and audio data and/or may also store instructions for implementation on the controller 56. The controller 56 may further be connected to video codec circuitry 54 suitable for carrying out coding and decoding or audio and/or video data or assisting in encoding and/or decoding carried out by the controller 56.

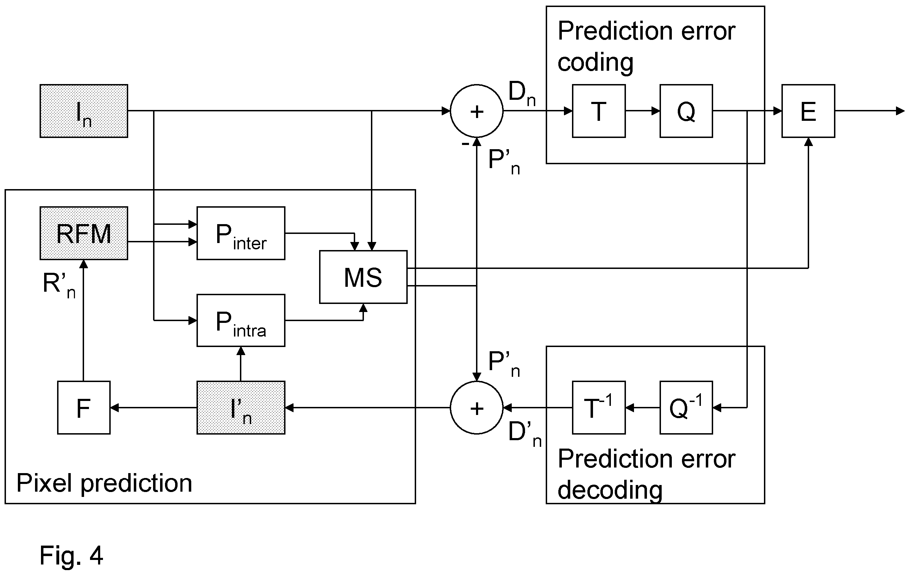

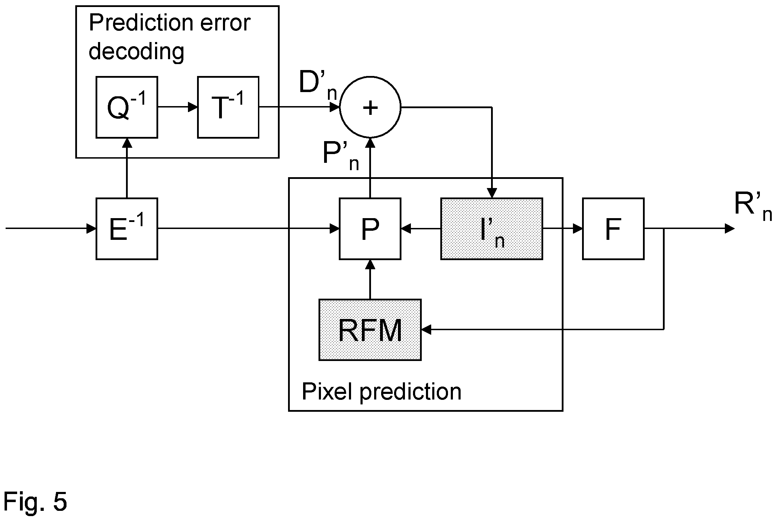

A video codec circuitry 54 may comprise an encoder that transforms the input video into a compressed representation suited for storage/transmission, and a decoder is able to uncompress the compressed video representation back into a viewable form. The encoder may discard some information in the original video sequence in order to represent the video in more compact form (i.e. at lower bitrate). Figure 4 illustrates an example of a video encoder, where $I_n$: Image to be encoded; $P'_n$: Predicted representation of an image block; $D_n$: Prediction error signal; $D'_n$: Reconstructed prediction error signal; $I'_n$: Preliminary reconstructed image; $R'_n$: Final reconstructed image ; $T, T_{-1}$: Transform and inverse transform; $Q, Q_{-1}$: Quantization and inverse quantization; $E$: Entropy encoding; $RFM$: Reference frame memory; $P_{inter}$: Inter prediction; $P_{intra}$: Intra prediction; $MS$: Mode selection; $F$: Filtering. Figure 5 illustrates a block diagram of a video decoder where $P'_n$: Predicted representation of an image block; $D'n$: Reconstructed prediction error signal; $I'_n$: Preliminary reconstructed image; $R'_n$: Final reconstructed image; $T_{-1}$: Inverse transform; $Q_{-1}$: Inverse quantization; $E_{-1}$: Entropy decoding; $RFM$: Reference frame memory; $P$: Prediction (either inter or intra); $F$: Filtering. In some embodiments, the apparatus 50 (Figures 1 and 2) comprises only an encoder or a decoder, is some other embodiments the apparatus 50 comprises both.

Referring again to Figures 1 and 2. The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

According to an embodiment, the apparatus 50 comprises a camera 42 capable of recording or detecting individual frames which are then passed to the codec 54 or controller for processing. According to an embodiment, the apparatus may receive the video image data for processing from another device prior to transmission and/or storage. According to an embodiment, the apparatus 50 may receive the images for processing either wirelessly or by a wired connection.

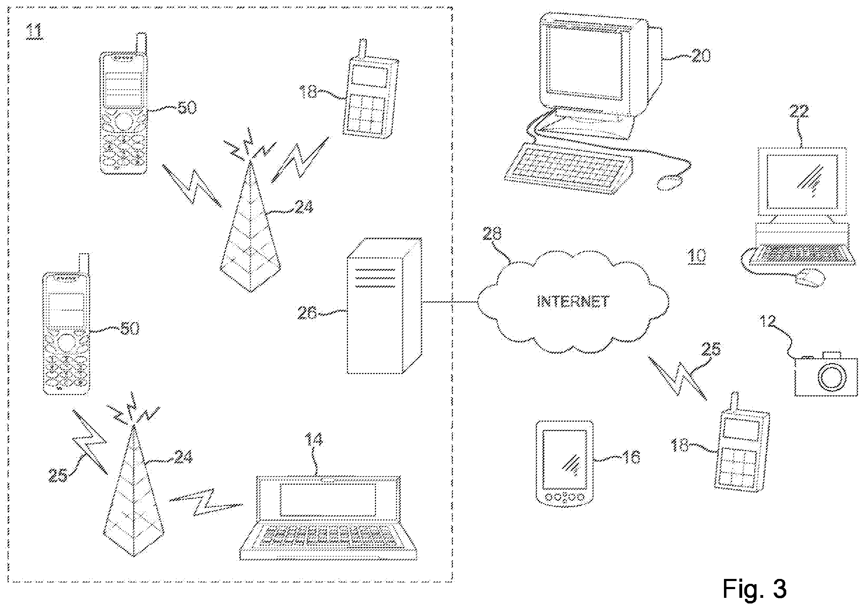

Figure 3 shows a system configuration comprising a plurality of apparatuses, networks and network elements according to an embodiment. The system 10 comprises multiple communication devices which can communicate through one or more networks. The system 10 may comprise any combination of wired or wireless networks including, but not limited to a wireless cellular telephone network (such as a GSM, UMTS, CDMA network, etc.), a wireless local area network (WLAN), such as defined by any of the IEEE 802.x standards, a Bluetooth personal area network, an Ethernet local area network, a token ring local area network, a wide area network, and the internet.

The system 10 may include both wired and wireless communication devices or apparatus 50 suitable for implementing present embodiments. For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include but are not limited to, an electronic device or apparatus 50, a combination of a personal digital assistant (PDA) and a mobile telephone 14, a PDA 16, an integrated messaging device (IMD) 18, a desktop computer 20, a notebook computer 22, a digital camera 12. The apparatus 50 may be stationary or mobile when carried by an individual who is moving. The apparatus 50 may also be located in a mode of transport.

Some of further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telephone system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio infrared, laser, cable connections or any suitable connection.

As mentioned, the present embodiments relate to 360-degree panoramic images and video. Such 360-degree panoramic content cover horizontally the full 360-degree field-of-view around the capturing position of an imaging device (e.g. a camera or an apparatus of Figure 1). The vertical field-of-view may vary and can be e.g. 180 degrees. Panoramic image covering 360-degree field-of-view horizontally and 180-degree field-of-view vertically represents a sphere that has been mapped to a two-dimensional image plane using equirectangular projection. In this case, the horizontal coordinate may be considered equivalent to a longitude, and the vertical coordinate may be considered equivalent to a latitude, with no transformation or scaling applied. In some cases panoramic content with 360-degree horizontal field-of-view but with less than 180-degree vertical field-of-view may be considered special cases of equirectangular projection, where the polar areas of the sphere have not been mapped onto the two-dimensional image plane.

360-degree panoramic video content can be acquired by various means. For example, the pictures of more than one camera sensor can be stitched to a single 360-degree panoramic image. There are dedicated devices and camera rigs on the market for implementing this. Yet, as another non-limiting example, a 360-degree panoramic video content can be acquired by a single image sensor with an optical arrangement.

Video coding of related art is described next.

The H.264/AVC standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organization for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, integrating new extensions or features to the specification. These extensions include Scalable Video Coding (SVC) and Multiview Video Coding (MVC).

Version 1 of the High Efficiency Video Coding (H.265/HEVC a.k.a. HEVC) standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Version 2 of H.265/HEVC included scalable, multiview, and fidelity range extensions, which may be abbreviated SHVC, MV-HEVC, and REXT, respectively. Version 2 of H.265/HEVC was published as ITU-T Recommendation H.265 (10/2014) and as Edition 2 of ISO/IEC 23008-2. There are currently ongoing standardization projects to develop further extensions to H.265/HEVC, including three-dimensional and screen content coding extensions, which may be abbreviated 3D-HEVC and SCC, respectively.

SHVC, MV-HEVC, and 3D-HEVC use a common basis specification, specified in Annex F of the version 2 of the HEVC standard. This common basis comprises for example high-level syntax and semantics e.g. specifying some of the characteristics of the layers of the bitstream, such as inter-layer dependencies, as well as decoding processes, such as reference picture list construction including inter-layer reference pictures and picture order count derivation for multi-layer bitstream. Annex F may also be used in potential subsequent multi-layer extensions of HEVC. It is to be understood that even though a video encoder, a video decoder, encoding methods, decoding methods, bitstream structures, and/or embodiments may be described in the following with reference to specific extensions, such as SHVC and/or MV-HEVC, they are generally applicable to any multi-layer extensions of HEVC, and even more generally to any multi-layer video coding scheme.

Many hybrid video codecs, including H.264/AVC and HEVC, encode video information in two phases. In the first phase, predictive coding is applied for example as so-called sample prediction and/or so-called syntax prediction.

In the sample prediction, pixel or sample values in a certain picture area or "block" are predicted. These pixel or sample values can be predicted, for example, using one or more of the following ways:

- Motion compensation mechanisms (which may also be referred to as temporal prediction or motion-compensated temporal prediction or motion-compensated prediction or MCP or inter prediction), which involve finding and indicating an area in one of the previously encoded video frames that corresponds closely to the block being coded.
- Intra prediction, where pixel or sample values can be predicted by spatial mechanism which involve finding and indicating a spatial region relationship. More generally, intra prediction can be performed in spatial or transform domain, i.e., either sample values or transform coefficients can be predicted. Intra prediction is typically exploited in intra coding, where no inter prediction is applied.

In many video codecs, including H.264/AVC and HEVC, motion information is indicated by motion vectors associated with each motion compensated image block. Each of these motion vectors represents the displacement of the image block in the picture to be coded (in the encoder) or decoded (at the decoder) and the prediction source block in one of the previously coded or decoded images (or picture). H.264/AVC and HEVC, as many other video compression standards, divide a picture into a mesh of rectangles, for each of which a similar block in one of the reference pictures is indicated for inter prediction. The location of the prediction block is coded as a motion vector that indicates the position of the prediction block relative to the block being coded.

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

In the syntax prediction, which may also be referred to as parameter prediction, syntax elements and/or syntax element values and/or variables derived from syntax elements are predicted from syntax elements (de)coded earlier and/or variables derived earlier. Non-limiting examples of syntax prediction are provided below:

- In motion vector prediction, motion vectors e.g. for inter and/or inter-view prediction may be coded differentially with respect to a block-specific predicted motion vector. In many video codecs, the predicted motion vectors are created in a predefined way, for example by calculating the median of the encoded or decoded motion vectors of the adjacent blocks. Another way to create motion vector predictions, sometimes referred to as advanced motion vector prediction (AMVP), is to generate a list of candidate predictions from adjacent blocks and/or co-located blocks in temporal reference pictures and signaling the chosen candidate as the motion vector predictor. In addition to predicting the motion vector values, the reference index of previously coded/decoded picture can be predicted. The reference index may be predicted from adjacent blocks and/or co-located blocks in temporal reference picture. Differential coding of motion vectors may be disabled across slice boundaries.
- The block partitioning, e.g. from CTU to CUs and down to PUs, may be predicted.
- In filter parameter prediction, the filtering parameters e.g. for sample adaptive offset may be predicted.

Prediction approaches using image information from a previously coded image can also be called as inter prediction methods which may also be referred to as temporal prediction and motion compensation. Inter prediction may sometimes be considered to only include motion-compensated temporal prediction, while it may sometimes be considered to include all types of prediction where a reconstructed/decoded block of samples is used as prediction source, therefore including conventional inter-view prediction for example. Inter prediction may be considered to comprise only sample prediction but it may alternatively be considered to comprise both sample and syntax prediction. As a result of syntax and sample prediction, a predicted block of pixels of samples may be obtained. Prediction approaches using image information with the same image can also be called as intra prediction methods.

The second phase is one of coding the error between the predicted block of pixels or samples and the original block of pixels or samples. This may be accomplished by transforming the difference in pixel or sample values using a specified transform. This transform may be e.g. a Discrete Cosine Transform (DCT) or a variant thereof. After transforming the difference, the transformed difference is quantized and entropy coded. In some coding schemes, an encoder can indicate, e.g. on transform unit basis, to bypass the transform and code a prediction error block in the sample domain.

By varying the fidelity of the quantization process, the encoder can control the balance between the accuracy of the pixel or sample representation (i.e. the visual quality of the picture) and the size of the resulting encoded video representation (i.e. the file size or transmission bit rate).

The decoder reconstructs the output video by applying a prediction mechanism similar to that user by the encoder in order to form a predicted representation of the pixel or sample blocks (using the motion or spatial information created by the encoder and included in the compressed representation of the image) and prediction error decoding (the inverse operation of the prediction error coding to recover the quantized prediction error signal in the spatial domain).

After applying pixel or sample prediction and error decoding processes the decoder combines the prediction and the prediction error signals (the pixel or sample values) to form the output video frame.

The decoder (and encoder) may also apply additional filtering processes in order to improve the quality of the output video before passing it for display and/or storing as a prediction reference for the forthcoming pictures in the video sequence. The filtering may for example include one more of the following: deblocking, sample adaptive offset (SAO), and/or adaptive loop filtering (ALF).

Block-based coding may create visible discontinuities at block boundaries of reconstructed or decoded pictures. Filtering on a boundary of a grid (e.g. a grid of 4x4 luma samples) is determined by an encoder and/or a decoder to be applied when a pre-defined (e.g. in a coding standard) and/or signaled set of conditions is fulfilled, such as the following:

- the boundary is a block boundary, such as a prediction unit boundary or a transform unit boundary e.g. as specified for HEVC;
- the boundary strength (see below) is significant or relevant, e.g. greater than zero; and
- the variation of sample values on both sides of the boundary is below a specified threshold, wherein the threshold value may depend on e.g. a quantization parameter used in transform coding.

The boundary strength to be used in deblocking loop filtering can be determined based on several conditions and rules, such as one or more of the following or alike:

- when at least one of the blocks adjacent to the boundary is intra-coded, the boundary strength can be set to be significant, such as 2;
- when at least one of the blocks adjacent to the boundary has non-zero coded residual coefficient and the boundary is a TU boundary, the boundary strength can be set to be relevant, such as 1;
- when the absolute differences between motion vectors of the two blocks adjacent to the boundary are greater than or equal to 1 in units of integer luma samples, the boundary strength can be set to be relevant, such as 1;
- when different reference pictures are used for the motion vectors in the two blocks adjacent to the boundary, the boundary strength can be set to be relevant, such as 1;
- when the number of motion vectors in the two blocks adjacent to the boundary, the boundary strength can be set to be relevant, such as 1;
- otherwise, the boundary strength can be set to be insignificant (or irrelevant), such as 0.

The deblocking loop filter may include multiple filtering modes or strengths, which may be adaptively selected based on the features of the blocks adjacent to the boundary, such as the quantization parameter value, and/or signaling included by the encoder in the bitstream. For example, the deblocking loop filter may comprise a normal filtering mode and a strong filtering mode, which may differ in terms of the number of filter taps (i.e. number of samples being filtered on both sides of the boundary) and/or the filter tap values. For example, filtering of two samples along both sides of the boundary may be performed with a filter having the impulse response of (3 7 9 -3)/16, when omitting the potential impact of a clipping operation.

An example of SAO is given next with reference to HEVC; however, SAO can be similarly applied to other coding schemes too. In SAO, a picture is divided into regions where a separate SAO decision is made for each region. In HEVC, the basic unit for adapting SAO parameters is CTU (therefore an SAO region is the block covered by the corresponding CTU).

In the SAO algorithm, samples in a CTU are classified according to a set of rules and each classified set of samples are enhanced by adding offset values. The offset values are signalled in the bitstream. There are two types of offsets: 1) Band offset 2) Edge offset. For a CTU, either no SAO or band offset or edge offset is employed. Choice of whether no SAO or band or edge offset to be used may be decided by the encoder with e.g. rate distortion optimization (RDO) and signaled to the decoder.

The adaptive loop filter (ALF) is another method to enhance quality of the reconstructed samples. This may be achieved by filtering the sample values in the loop. In some embodiments the encoder determines which region of the pictures are to be filtered and the filter coefficients based on e.g. RDO and this information is signalled to the decoder.

**EP 3 354 029 B1**

Inter prediction process may be characterized using one or more of the following factors:

- The accuracy of motion vector representation. For example, motion vectors may be of quarter-pixel accuracy, and sample values in fractional-pixel positions may be obtained using a finite impulse response (FIR) filter.
- Block partitioning for inter prediction. Many coding standards, including H.264/AVC and HEVC, allow selection of the size and shape of the block for which a motion vector is applied for motion-compensated prediction in the encoder, and indicating the selected size and shape in the bitstream so that decoders can reproduce the motion-compensated prediction done in the encoder.
- Number of reference pictures for inter prediction. The sources of inter prediction are previously decoded pictures. Many coding standards, including H.264/AVC and HEVC, enable storage of multiple reference pictures for inter prediction and selection of the used reference picture on a block basis. For example, reference pictures may be selected on macroblock or macroblock partition basis in H.264/AVC and on PU or CU basis in HEVC. Many coding standards, such as H.264/AVC and HEVC, include syntax structures in the bitstream that enable decoders to create one or more reference picture lists. A reference picture index to a reference picture list may be used to indicate which one of the multiple reference pictures is used for inter prediction for a particular block. A reference picture index may be coded by an encoder into the bitstream in selected inter coding modes or it may be derived (by an encoder and a decoder) for example using neighboring blocks in other inter coding modes.
- Motion vector prediction. In order to represent motion vectors efficiently in bitstreams, motion vectors may be coded differentially with respect to a block-specific predicted motion vector. In many video codecs, the predicted motion vectors are created in a predefined way, for example, by calculating the median of the encoded or decoded motion vectors of the adjacent blocks. Another way to create motion vectors predictions, sometimes referred to as advanced motion vector prediction (AMVP), is to generate a list of candidate predictions from adjacent blocks and/or co-located blocks in temporal reference pictures and signaling the chosen candidate as the motion vector predictor. In addition to predicting the motion vector values, the reference index of previously coded/decoded picture can be predicted. The reference index may be predicted, e.g. from adjacent blocks and/or co-located blocks in temporal reference picture. Differential coding of motion vectors may be disabled across slice boundaries.
- Multi-hypothesis motion-compensated prediction. H.264/AVC and HEVC enable the use of a single prediction block in P slices (herein referred to as uni-predictive slices) or a linear combination of two motion-compensated prediction blocks for bi-predictive slices, which are also referred to as B slices. Individual blocks in B slices may be bi-predicted, uni-predicted or intra-predicted, and individual blocks in P slices may be uni-predicted or intra-predicted. The reference pictures for a bi-predictive picture may not be limited to be the subsequent picture and the previous picture in output order, but rather any reference picture may be used. In many coding standards, such as H.264/AVC and HEVC, one reference picture list, referred to as reference picture list 0, is constructed for P slices, and two reference picture lists, list 0 and list 1, are constructed for B slices. For B slices, when prediction is forward direction may refer to prediction form a reference picture in reference picture list 0, and prediction in backward direction may refer to prediction from a reference picture in reference picture list 1, even though the reference pictures for prediction may not have any decoding or output order relation to each other or to the current picture.
- Weighted prediction. Many coding standards use a prediction weight of 1 for prediction blocks of inter (P) picture and 0.5 for each prediction block of a B picture (resulting into averaging). H.264/AVC allows weighted prediction for both P and B slices. In implicit weighted prediction, the weight are proportional to picture order counts (POC), while in explicit weighted prediction, prediction weights are explicitly indicated.

The inter prediction process may involve referring to sample locations outside picture boundaries at least for (but not necessarily limited to) the following reasons:

- Motion vectors may point to prediction blocks outside picture boundaries;
- Motion vectors may point to a non-integer sample location for which the sample value is interpolated using filtering that takes input samples from locations that are outside picture boundaries.

A motion vector or a piece of motion information may be considered to comprise a horizontal motion vector component and a vertical motion vector component. Sometimes, a motion vector or a piece of motion information may be considered to comprise also information or identification which reference picture is used.

A motion field associated with a picture may be considered to comprise of a set of motion information produced for every coded block of the picture. A motion field may be accessible by coordinates of a block, for example. A motion field may be used for example in TMVP of HEVC or any other motion prediction mechanism where a source or a reference for prediction other than the current (de)coded picture is used.

Different spatial granularity or units may be applied to represent and/or store a motion field. For example, a regular grid of spatial units may be used. For example, a picture may be divided into rectangular blocks of certain size (with

12

the possible exception of blocks at the edges of the picture, such as on the right edge and the bottom edge). For example, the size of the spatial unit may be equal to the smallest size for which a distinct motion can be indicated by the encoder in the bitstream, such as a 4x4 block in luma sample units. For example, a so-called compressed motion field may be used, where the spatial unit may be equal to a pre-defined or indicated size, such as a 16x16 block in luma sample units, which size may be greater than the smallest size for indicating distinct motion. For example, an HEVC encoder and/or decoder may be implemented in a manner that a motion data storage reduction (MDSR) or motion field compression is performed for each decoded motion field (prior to using the motion field for any prediction between pictures). In an HEVC implementation, MDSR may reduce the granularity of motion data to 16x16 blocks in luma sample units by keeping the motion applicable to the top-left sample of the 16x16 block in the compressed motion field. The encoder may encode indication(s) related to the spatial unit of the compressed motion field as one or more syntax elements and/or syntax element values for example in a sequence-level syntax structure, such as a video parameter set or a sequence parameter set. In some (de)coding methods and/or devices, a motion field may be represented and/or stored according to the block partitioning of the motion prediction (e.g. according to prediction units of the HEVC standard). In some (de)coding methods and/or devices, a combination of a regular grid and block partitioning may be applied so that motion associated with partitions greater than a pre-defined or indicated spatial unit size is represented and/or stored associated with those partitions, whereas motion associated with partitions smaller than or unaligned with a pre-defined or indicated spatial unit size or grid is represented and/or stored for the pre-defined or indicated units.

Video encoders may utilize Lagrangian cost functions to find rate-distortion (RD) optimal coding modes, e.g. the desired Macroblock mode and associated motion vectors. This kind of cost function uses a weighting factor λ to tie together the (exact or estimated) image distortion due to lossy coding methods and the (exact or estimated) amount of information that is required to represent the pixel values in an image area:

$$C = D + \lambda R, \qquad (1)$$

where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Some key definitions, bitstream and coding structures, and concepts of H.264/AVC and HEVC are described in this section as an example of a video encoder, decoder, encoding method, decoding method, and a bitstream structure, wherein the embodiments may be implemented. Some of the key definitions, bitstream and coding structures, and concepts of H.264/AVC are the same as in HEVC - hence, they are described below jointly. The aspects of the invention are not limited to H.264/AVC or HEVC, but rather the description is given for one possible basis on top of which the invention may be partly or fully realized.

Similarly to many earlier video coding standards, the bitstream syntax and semantics as well as the decoding process for error-free bitstreams are specified in H.264/AVC and HEVC. The encoding process is not specified, but encoders must generate conforming bitstreams. Bitstream and decoder conformance can be verified with the Hypothetical Reference Decoder (HRD). The standards contain coding tools that help in coping with transmission errors and losses, but the use of the tools in encoding is optional and no decoding process has been specified for erroneous bitstreams.

In the description of existing standards as well as in the description of example embodiments, a syntax element may be defined as an element of data represented in the bitstream. A syntax structure may be defined as zero or more syntax elements present together in the bitstream in a specified order. In the description of existing standards as well as in the description of example embodiments, a phrase "by external means" or "through external means" may be used. For example, an entity, such as a syntax structure or a value of a variable used in the decoding process, may be provided "by external means" to the decoding process. The phrase "by external means" may indicate that the entity is not included in the bitstream created by the encoder, but rather conveyed externally from the bitstream for example using a control protocol. It may alternatively or additionally mean that the entity is not created by the encoder, but may be created for example in the player or decoding control logic or alike that is using the decoder. The decoder may have an interface for inputting the external means, such as variable values.

The elementary unit for the input to an H.264/AVC or HEVC encoder and the output of an H.264/AVC or HEVC decoder, respectively, is a picture. A picture given as an input to an encoder may also referred to as a source picture, and a picture decoded by a decoded may be referred to as a decoded picture.

The source and decoded pictures are each comprised of one or more sample arrays, such as one of the following sets of sample arrays:

- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g. in a coded bitstream e.g. using the Video Usability Information (VUI) syntax of H.264/AVC and/or HEVC. A component may be defined as an array or single sample from one of the three sample arrays arrays (luma and two chroma) or the array or a single sample of the array that compose a picture in monochrome format.

In H.264/AVC and HEVC, a picture may either be a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays. Chroma formats may be summarized as follows:

- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate color planes are in use, each of the two chroma arrays has the same height and width as the luma array.

In H.264/AVC and HEVC, it is possible to code sample arrays as separate color planes into the bitstream and respectively decode separately coded color planes from the bitstream. When separate color planes are in use, each one of them is separately processed (by the encoder and/or the decoder) as a picture with monochrome sampling.

A partitioning may be defined as a division of a set into subsets such that each element of the set is in exactly one of the subsets.

When describing the operation of HEVC encoding and/or decoding, the following terms may be used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples.

In some video codecs, such as High Efficiency Video Coding (HEVC) codec, video pictures are divided into coding units (CU) covering the area of the picture. A CU consists of one or more prediction units (PU) defining the prediction process for the samples within the CU and one or more transform units (TU) defining the prediction error coding process for the samples in the said CU. Typically, a CU consists of a square block of samples with a size selectable from a predefined set of possible CU sizes. A CU with the maximum allowed size may be named as LCU (largest coding unit) or coding tree unit (CTU) and the video picture is divided into non-overlapping LCUs. An LCU can be further split into a combination of smaller CUs, e.g. by recursively splitting the LCU and resultant CUs. Each resulting CU typically has at least one PU and at least one TU associated with it. Each PU and TU can be further split into smaller PUs and TUs in order to increase granularity of the prediction and prediction error coding processes, respectively. Each PU has prediction information associated with it defining what kind of a prediction is to be applied for the pixels within that PU (e.g. motion vector information for inter predicted PUs and intra prediction directionality information for intra predicted PUs).

Each TU can be associated with information describing the prediction error decoding process for the samples within the said TU (including e.g. DCT coefficient information). It is typically signalled at CU level whether prediction error coding is applied or not for each CU. In the case there is no prediction error residual associated with the CU, it can be considered there are no TUs for the said CU. The division of the image into CUs, and division of CUs into PUs and TUs is typically signalled in the bitstream allowing the decoder to reproduce the intended structure of these units.

In HEVC, a picture can be partitioned in tiles, which are rectangular and contain an integer number of LCUs. In HEVC, the partitioning to tiles forms a regular grid, where heights and widths of tiles differ from each other by one LCU at the maximum. In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

Video coding standards and specifications may allow encoders to divide a coded picture to coded slices or alike. In-picture prediction is typically disabled across slice boundaries. Thus, slices can be regarded as a way to split a coded picture to independently decodable pieces. In H.264/AVC and HEVC, in-picture prediction may be disabled across slice boundaries. Thus, slices can be regarded as a way to split a coded picture into independently decodable pieces, and slices are therefore often regarded as elementary units for transmission. In many cases, encoders may indicate in the bitstream which types of in-picture prediction are turned off across slice boundaries, and the decoder operation takes this information into account for example when concluding which prediction sources are available. For example, samples from a neighboring macroblock or CU may be regarded as unavailable for intra prediction, if the neighboring macroblock or CU resides in a different slice.

An elementary unit for the output of an H.264/AVC or HEVC encoder and the input of an H.264/AVC or HEVC decoder, respectively, is a Network Abstraction Layer (NAL) unit. For transport over packet-oriented networks or storage into structured files, NAL units may be encapsulated into packets or similar structures. A NAL unit may be defined as a syntax structure containing an indication of the type of data to follow and bytes containing that data in the form of an RBSP interspersed as necessary with startcode emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0. NAL units consist of a header and payload.

In HEVC, a two-byte NAL unit header is used for all specified NAL unit types. The NAL unit header contains one reserved bit, a six-bit NAL unit type indication, a three-bit nuh_temporal_id_plus1 indication for temporal level (may be required to be greater than or equal to 1) and a six-bit nuh_layer_id syntax element. The temporal_id_plus1 syntax element may be regarded as a temporal identifier for the NAL unit, and a zero-based TemporalId variable may be derived as follows: TemporalId = temporal_id_plus1 - 1. TemporalId equal to 0 corresponds to the lowest temporal level. The value of temporal_id_plus1 is required to be non-zero in order to avoid start code emulation involving the two NAL unit header bytes. The bitstream created by excluding all VCL NAL units having a TemporalId greater than or equal to a selected value and including all other VCL NAL units remains conforming. Consequently, a picture having TemporalId equal to TID does not use any picture having a TemporalId greater than TID as inter prediction reference. A sub-layer or a temporal sub-layer may be defined to be a temporal scalable layer of a temporal scalable bitstream, consisting of VCL NAL units with a particular value of the TemporalId variable and the associated non-VCL NAL units. nuh_layer_id can be understood as a scalability layer identifier.

NAL units can be categorized into Video Coding Layer (VCL) NAL units and non-VCL NAL units. In H.264/AVC, coded slice NAL units contain syntax elements representing one or more coded macroblocks, each of which corresponds to a block of samples in the uncompressed picture. In HEVC, VCL NAL units contain syntax elements representing one or more CU.

A non-VCL NAL unit may be for example one of the following types: a sequence parameter set, a picture parameter set, a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values.

Parameters that remain unchanged through a coded video sequence may be included in a sequence parameter set. In addition to the parameters that may be needed by the decoding process, the sequence parameter set may optionally contain video usability information (VUI), which includes parameters that may be important for buffering, picture output timing, rendering, and resource reservation. In HEVC a sequence parameter set RBSP includes parameters that can be referred to by one or more picture parameter set RBSPs or one or more SEI NAL units containing a buffering period SEI message. A picture parameter set contains such parameters that are likely to be unchanged in several coded pictures. A picture parameter set RBSP may include parameters that can be referred to by the coded slice NAL units of one or more coded pictures.

In HEVC, a video parameter set (VPS) may be defined as a syntax structure containing syntax elements that apply to zero or more entire coded video sequences as determined by the content of a syntax element found in the SPS referred to by a syntax element found in the PPS referred to by a syntax element found in each slice segment header. A video parameter set RBSP may include parameters that can be referred to by one or more sequence parameter set RBSPs.

The relationship and hierarchy between video parameter set (VPS), sequence parameter set (SPS), and picture parameter set (PPS) may be described as follows. VPS resides one level above SPS in the parameter set hierarchy and in the context of scalability and/or 3D video. VPS may include parameters that are common for all slices across all (scalability or view) layers in the entire coded video sequence. SPS includes the parameters that are common for all slices in a particular (scalability or view) layer in the entire coded video sequence, and may be shared by multiple (scalability or view) layers. PPS includes the parameters that are common for all slices in a particular layer representation (the representation of one scalability or view layer in one access unit) and are likely to be shared by all slices in multiple layer representations.

H.264/AVC and HEVC syntax allows many instances of parameter sets, and each instance is identified with a unique identifier. In order to limit the memory usage needed for parameter sets, the value range for parameter set identifiers has been limited. In H.264/AVC and HEVC, each slice header includes the identifier of the picture parameter set that is active for the decoding of the picture that contains the slice, and each picture parameter set contains the identifier of the active sequence parameter set. Consequently, the transmission of picture and sequence parameter sets does not have to be accurately synchronized with the transmission of slices. Instead, it is sufficient that the active sequence and picture parameter sets are received at any moment before they are referenced, which allows transmission of parameter sets "out-of-band" using a more reliable transmission mechanism compared to the protocols used for the slice data. For example, parameter sets can be included as a parameter in the session description for Real-time Transport Protocol (RTP) sessions. If parameter sets are transmitted in-band, they can be repeated to improve error robustness.

Out-of-band transmission, signaling or storage can additionally or alternatively be used for other purposes than tolerance against transmission errors, such as ease of access or session negotiation. For example, a sample entry of a track in a file conforming to the ISOBMFF may comprise parameter sets, while the coded data in the bitstream is stored elsewhere in the file or in another file. The phrase along the bitstream (e.g. indicating along the bitstream) may be used in claims and described embodiments to refer to out-of-band transmission, signaling, or storage in a manner that the out-of-band data is associated with the bitstream. The phrase decoding along the bitstream or alike may refer to decoding the referred out-of-band data (which may be obtained from out-of-band transmission, signaling, or storage) that is associated with the bitstream.

There may be different types of intra prediction modes available in a coding scheme, out of which an encoder can select and indicate the used one, e.g. on block or coding unit basis. A decoder may decode the indicated intra prediction mode and reconstruct the prediction block accordingly. For example, several angular intra prediction modes, each for different angular direction, may be available. Angular intra prediction may be considered to extrapolate the border samples of adjacent blocks along a linear prediction direction. Additionally or alternatively, a planar prediction mode may be available. Planar prediction may be considered to essentially form a prediction bock, in which each sample of a prediction block may be specified to be an average of vertically aligned sample in the adjacent sample column on the left of the current block and the horizontally aligned sample in the adjacent sample line above the current block. Additionally or alternatively, a DC prediction mode may be available, in which the prediction block is essentially an average sample value of a neighboring block or blocks.

H.265/HEVC includes two motion vector prediction schemes, namely the advanced motion vector prediction (AMVP) and the merge mode. In the AMVP or the merge mode, a list of motion vector candidates is derived for a PU. There are two kinds of candidates: spatial candidates and temporal candidates, where temporal candidates may also be referred to as TMVP candidates.

One of the candidates in the merge list and/or the candidate list for AMVP or any similar motion vector candidate list may be a TMVP candidate or alike, which may be derived from the collocated block within an indicated or inferred reference picture, such as the reference picture indicated for example in the slice header. In HEVC, the reference picture list to be used for obtaining a collocated partition is chosen according to the collocated_from_l0_flag syntax element in the slice header. When the flag is equal to 1, it specifies that the picture that contains the collocated partition is derived from list 0, otherwise the picture is derived from list 1. When collocated_from_l0_flag is not present, it is inferred to be equal to 1. The collocated_ref_idx in the slice header specifies the reference index of the picture that contains the collocated partition. When the current slice is a P slice, collocated_ref_idx refers to a picture in list 0. When the current slice is a B slice, collocated_ref_idx refers to a picture in list 0 if collocated_from_l0 is 1, otherwise it refers to a picture in list 1. collocated_ref_idx always refers to a valid list entry, and the resulting picture is the same for all slices of a coded picture. When collocated_ref_idx is not present, it is inferred to be equal to 0.

In HEVC the so-called target reference index for temporal motion vector prediction in the merge list is set as 0 when the motion coding mode is the merge mode. When the motion coding mode in HEVC utilizing the temporal motion vector prediction is the advanced motion vector prediction mode, the target reference index values are explicitly indicated (e.g. per each PU).

In HEVC, the availability of a candidate predicted motion vector (PMV) may be determined as follows (both for spatial and temporal candidates) (SRTP = short-term reference picture, LRTP = long-term reference picture):

| reference picture for target reference index | reference picture for candidate PMV | candidate PMV availability |
|---|---|---|
| STRP | STRP | "available" (and scaled) |
| STRP | LTRP | "unavailable" |
| LTRP | STRP | "unavailable" |
| LTRP | LTRP | "available" (but not scaled) |

In HEVC, when the target reference index value has been determined, the motion vector value of the temporal motion vector prediction may be derived as follows: The motion vector PMV at the block that is collocated with the bottom-right neighbor of the current prediction unit is obtained. The picture where the collocated block resides may be e.g. determined according to the signalled reference index in the slice header as described above. If the PMV at bottom-right neighbor is not available, the motion vector PMV at the location of the current PU of the collocated picture is obtained. The determined available motion vector PMV at the co-located block is scaled with respect to the ratio of a first picture order count difference and a second picture order count difference. The first picture order count (POC) difference is derived between the picture containing the co-located block and the reference picture of the motion vector of the co-located block. The second picture order count difference is derived between the current picture and the target reference picture. If one but not both of the target reference picture and the reference picture of the motion vector of the collocated block is a long-term reference picture (while the other is a short-term reference picture), the TMVP candidate may be considered unavailable. If both of the target reference picture and the reference picture of the motion vector of the collocated block are long-term reference pictures, no POC-based motion vector scaling may be applied.

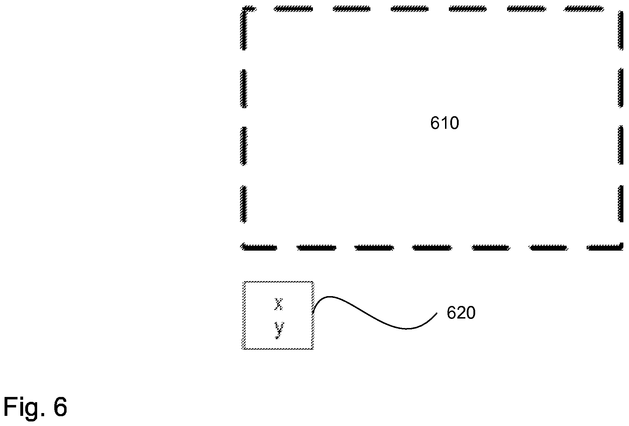

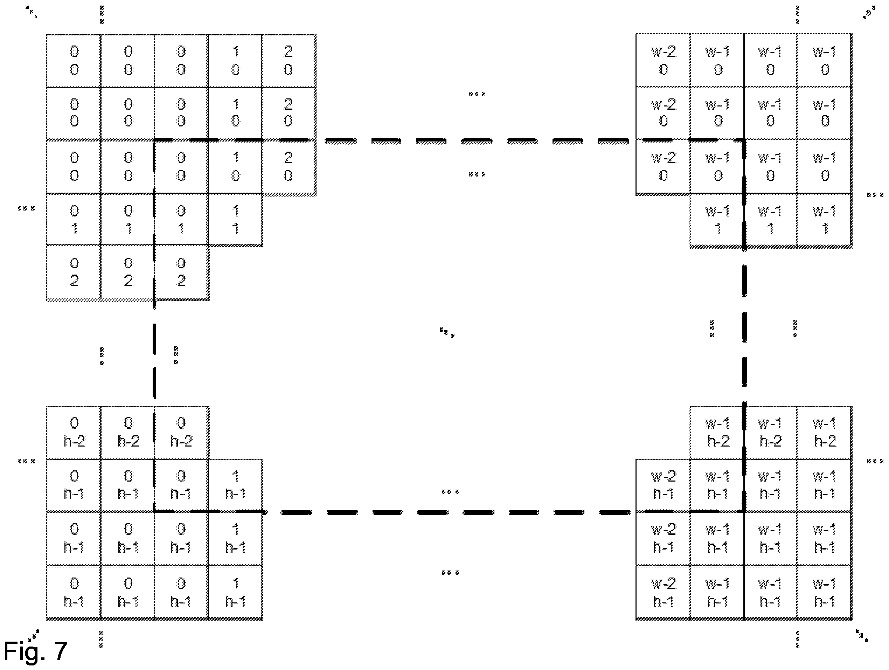

In several video coding standards, such as H.263, H.264/AVC and H.265/HEVC, motion vectors are allowed to point to an area outside the picture boundaries for obtaining the prediction block and fractional sample interpolation may use sample locations outside picture boundaries. For obtaining samples outside picture boundaries as part of the prediction process, the respective samples of the picture boundaries are effectively copied. This is illustrated by Figure 7 using the legend described in Figure 6. In Figure 6, reference number 610 defines a sample array of a reference picture, and reference number 620 defines a sample of location (x, y) of the sample array. Figure 7 illustrates a conventional handling of referring to samples outside picture boundaries in the inter prediction process.

The mechanism to support sample locations outside picture boundaries in the inter prediction process may be implemented in multiple ways. One way is to allocate a sample array that is larger than the decoded picture size, i.e. has margins on top of, below, on the right side, and on the left side of the image. In addition to or instead of using such margins, the location of a sample used for prediction (either as input to fractional sample interpolation for the prediction block or as a sample in the prediction block itself) may be saturated so that the location does not exceed the picture boundaries (with margins, if such are used). Some of the video coding standards describe the support of motion vectors over picture boundaries in such manner.

For example, the following equation is used in HEVC for deriving the locations ( $xA_{i,j}$, $yA_{i,j}$) inside the given array refPicLXL of luma samples (or a reference picture) for fractional sample interpolation for generating an (intermediate) prediction block:

$$xA_{i,j} = \text{Clip3}(0, \text{pic\_width\_in\_luma\_samples} - 1, xInt_L + i)$$

$$yA_{i,j} = \text{Clip3}(0, \text{pic\_height\_in\_luma\_samples} - 1, yInt_L + j)$$

where

( $xInt_L$, $yInt_L$ ) is a a luma location in full-sample units;
i and j are relative positions within the interpolation filter window;
pic_width_in_luma_samples is the picture width in luma samples;
pic_height_in_luma_samples is the picture height in luma samples; and
Clip3( ) is specified as follows:

$$\text{Clip3}( x, y, z ) = \begin{cases} x & ; & z < x \\ y & ; & z > y \\ z & ; & \text{otherwise} \end{cases}$$

It can be observed that if a sample location had a negative coordinate (prior to the Clip3) operation, it would saturate to 0 with the Clip3 operation. Similarly, if a sample location had a coordinate greater than width (for horizontal location) or height (for vertical location), it would saturate to width - 1 or height - 1, respectively.

Similar equations exist also for suturing the chroma sample locations to be within the chroma sample array boundaries in the fractional sample interpolation for inter prediction of chroma components.

When encoding and/or decoding 360-degree panoramic video, samples outside picture boundaries can be used as reference due to motion vectors pointing outside the picture boundaries and/or due to fractional sample interpolation using sample values outside the picture boundaries, as described earlier. Thanks to the fact that the entire 360 degrees of field-of-view is represented, the sample values from the opposite side of the picture can be used instead of the conventional approach of using the boundary sample when a sample horizontally outside the picture boundary is needed in a prediction process. This is illustrated in Figure 8. Figure 8 can be applied for the handling of motion vectors over picture boundaries (panoramic video coding). Such handling of pixels outside picture boundaries can be handled by extending the reference picture to be larger (in width and/or height) compared to the coded picture. Alternative implementations as described below are also possible.

Instead of saturating negative horizontal locations to 0 and horizontal sample locations greater than width - 1 to width - 1 (i.e. the horizontal sample location of the right-most sample column of the picture), the referred horizontal sample locations outside picture boundaries may be wrapped. This means that horizontal sample locations greater than width - 1 are wrapped so that they refer to sample columns on the left side of the picture. Vice versa, horizontal sample locations less than 0 are wrapped so that they refer to sample column on the right side of the picture.

The function Wrap() is specified as follows:

$$\text{Wrap( x, y, z )} = \begin{cases} y - (x - z) + 1 & ; \quad z < x \\ x + (z - y) - 1 & ; \quad z > y \\ z & ; \quad \text{otherwise} \end{cases}$$

When referring to the equations above for fractional luma sample interpolation in HEVC, the following equation is used:

$$xA_{i,j} = \text{Wrap( 0, pic\_width\_in\_luma\_samples} - 1, xInt_L + i )$$

instead of the conventional equation:

$$xA_{i,j} = \text{Clip3( 0, pic\_width\_in\_luma\_samples} - 1, xInt_L + i )$$

In addition to the above-mentioned two techniques (i.e. referring to samples outside picture boundaries and wrapping the horizontal sample location for referred samples), also a combination of these techniques can be utilized. The margins can be set e.g. to cover the largest that refers to both samples inside decoded picture boundaries and outside decoded pictures boundaries. Sample location wrapping is used for prediction units that are completely outside decoded picture boundaries. This combination method may enable faster memory access than the approach of only using wrapping of the sample location.

As mentioned above, a motion vector can refer to a non-integer sample position in a reference picture. The sample values at a non-integer sample position can be obtained through a fractional sample interpolation process. A different process may be used for the luma sample array than for the chroma sample arrays. A fractional sample interpolation process for luma according to an example may operate as described next. The presented process is from HEVC and it needs to be understood that it is provided for exemplary purposes and that similar process can be realized e.g. by changing the number of filter taps.

Inputs to this process are: a luma location in full-sample units ( $xInt_L$, $yInt_L$ ); a luma location in fractional-sample units ( $xFrac_L$, $yFrac_L$); and the luma reference sample array refPicLX$_L$. Output of this process is a predicted luma sample value predSampleLX$_L$.

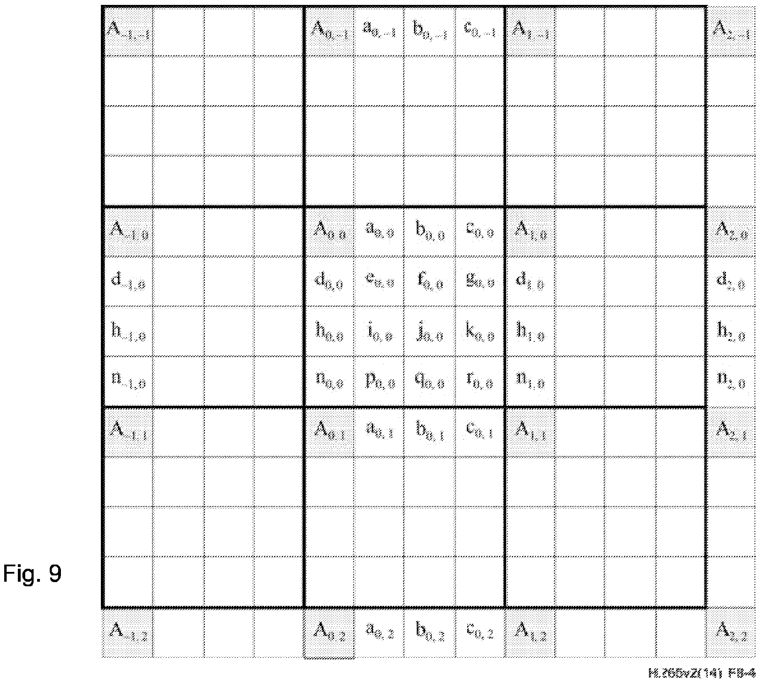

In Figure 9, the positions labelled with upper-case letters A$_{i,j}$ within shaded blocks represent luma samples at full-sample locations in side the given two-dimensional array refPicLX$_L$ of luma samples. These samples may be used for generating the predicted luma sample value predSampleLXL. The locations ( $xA_{i,j}$, $yA_{i,j}$) for each of the corresponding luma samples A$_{i,j}$ inside the given array refPicLX$_L$ of luma samples are derived as follows:

$$xA_{i,j} = \text{Clip3( 0, pic\_width\_in\_luma\_samples} - 1, xInt_L + i )$$

$$yA_{i,j} = \text{Clip3}(\ 0,\ \text{pic\_height\_in\_luma\_samples} - 1,\ yInt_L + j\ )$$

The position labelled with lower-case letters within un-shaded blocks represent luma samples at quarter-pel sample fractional locations. The luma location offset in fractional-sample units ($xFrac_L$, $yFrac_L$) specifies which of the generated luma samples at full-sample and fractional-sample of locations is assigned to the predicted luma sample value $predSampleLX_L$. This assignment is as specified in the table 1 below. The value $predSampleLX_L$ of is the output.

The variables shift1, shift2 and shift3 are derived as follows: The variable shift1 is set equal to Min(2, 14 - $BitDepth_Y$), the variable shift2 is set equal to 6 and the variable shift3 is set equal to Max(2, 14 - BitDepthy).

Given the luma samples $A_{i,j}$ at full-sample locations ( $xA_{i,j}\ yA_{i,j}$), the luma samples $a_{0,0}$ to $r_{0,0}$ at fractional sample positions are derived as follows:

- The samples labelled $a_{0,0}, b_{0,0}, c_{0,0}, d_{0,0}, h_{0,0}$ and $n_{0,0}$ are derived by applying an 8-tap filter to the nearest integer position samples as follows:

$$a_{0,0} = (\ -A_{-3,0} + 4 * A_{-2,0} - 10 * A_{-1,0} + 58 * A_{0,0} + 17 * A_{1,0} - 5 * A_{2,0} + A_{3,0}\ ) \gg \text{shift1}$$

$$b_{0,0} = (\ -A_{-3,0} + 4 * A_{-2,0} - 11 * A_{-1,0} + 40 * A_{0,0} + 40 * A_{1,0} - 11 * A_{2,0} + 4 * A_{3,0} - A_{4,0}\ ) \gg \text{shift1}$$

$$c_{0,0} = (\ A_{-2,0} - 5 * A_{-1,0} + 17 * A_{0,0} + 58 * A_{1,0} - 10 * A_{2,0} + 4 * A_{3,0} - A_{4,0}\ ) \gg \text{shift1}$$

$$d_{0,0} = (\ -A_{0,-3} + 4 * A_{0,-2} - 10 * A_{0,-1} + 58 * A_{0,0} + 17 * A_{0,1} - 5 * A_{0,2} + A_{0,3}\ ) \gg \text{shift1}$$

$$h_{0,0} = (\ -A_{0,-3} + 4 * A_{0,-2} - 11 * A_{0,-1} + 40 * A_{0,0} + 40 * A_{0,1} - 11 * A_{0,2} + 4 * A_{0,3} - A_{0,4}\ ) \gg \text{shift1}$$

$$n_{0,0} = (\ A_{0,-2} - 5 * A_{0,-1} + 17 * A_{0,0} + 58 * A_{0,1} - 10 * A_{0,2} + 4 * A_{0,3} - A_{0,4}\ ) \gg \text{shift1}$$

- The samples labelled $e_{0,0}, i_{0,0}, p_{0,0}, f_{0,0}, j_{0,0}, q_{0,0}, g_{0,0}, k_{0,0}$ and $r_{0,0}$ are derived by applying an 8-tap filter to the samples $a_{0,i}, b_{0,i}$ and $c_{0,i}$ with i = -3..4 in the vertical direction as follows:

$$e_{0,0} = (\ -a_{0,-3} + 4 * a_{0,-2} - 10 * a_{0,-1} + 58 * a_{0,0} + 17 * a_{0,1} - 5 * a_{0,2} + a_{0,3}\ ) \gg \text{shift2}$$

$$i_{0,0} = (\ -a_{0,-3} + 4 * a_{0,-2} - 11 * a_{0,-1} + 40 * a_{0,0} + 40 * a_{0,1} - 11 * a_{0,2} + 4 * a_{0,3} - a_{0,4}\ ) \gg \text{shift2}$$

$$p_{0,0} = (\ a_{0,-2} - 5 * a_{0,-1} + 17 * a_{0,0} + 58 * a_{0,1} - 10 * a_{0,2} + 4 * a_{0,3} - a_{0,4}\ ) \gg \text{shift2}$$

$$f_{0,0} = (\ -b_{0,-3} + 4 * b_{0,-2} - 10 * b_{0,-1} + 58 * b_{0,0} + 17 * b_{0,1} - 5 * b_{0,2} + b_{0,3}\ ) \gg \text{shift2}$$

$$j_{0,0} = (\ -b_{0,-3} + 4 * b_{0,-2} - 11 * b_{0,-1} + 40 * b_{0,0} + 40 * b_{0,1} - 11 * b_{0,2} + 4 * b_{0,3} - b_{0,4}\ ) \gg \text{shift2}$$

$$q_{0,0} = (\ b_{0,-2} - 5 * b_{0,-1} + 17 * b_{0,0} + 58 * b_{0,1} - 10 * b_{0,2} + 4 * b_{0,3} - b_{0,4}\ ) \gg \text{shift2}$$

$$g_{0,0} = (\ -c_{0,-3} + 4 * c_{0,-2} - 10 * c_{0,-1} + 58 * c_{0,0} + 17 * c_{0,1} - 5 * c_{0,2} + c_{0,3}\ ) \gg \text{shift2}$$

$$k_{0,0} = (\ -c_{0,-3} + 4 * c_{0,-2} - 11 * c_{0,-1} + 40 * c_{0,0} + 40 * c_{0,1} - 11 * c_{0,2} + 4 * c_{0,3} - c_{0,4}\ ) \gg \text{shift2}$$

$$r_{0,0} = (\ c_{0,-2} - 5 * c_{0,-1} + 17 * c_{0,0} + \qquad 58 * c_{0,1} - 10 * c_{0,2} + 4 * c_{0,3} - c_{0,4}\ ) \gg shift2$$

Table 1

| xFracL | 0 | 0 | 0 | 0 | 1 | 1 | 1 | 1 | 2 | 2 | 2 | 2 | 3 | 3 | 3 | 3 |
|---|---|---|---|---|---|---|---|---|---|---|---|---|---|---|---|---|
| yFracL | 0 | 1 | 2 | 3 | 0 | 1 | 2 | 3 | 0 | 1 | 2 | 3 | 0 | 1 | 2 | 3 |
| predSampleLX$_L$ | A << shift3 | d | h | n | a | e | i | p | b | f | j | q | c | g | k | r |

Scalable video coding may refer to coding structure where one bitstream can contain multiple representations of the content, for example, at different bitrates, resolutions or frame rates. In these cases the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A meaningful decoded representation can be produced by decoding only certain parts of a scalable bit stream. A scalable bitstream typically consists of a "base layer" providing the lowest quality video available and one or more enhancement layers that enhance the video quality when received and decoded together with the lower layers. In order to improve coding efficiency for the enhancement layers, the coded representation of that layer typically depends on the lower layers. E.g. the motion and mode information of the enhancement layer can be predicted from lower layers. Similarly the pixel data of the lower layers can be used to create prediction for the enhancement layer.

In some scalable video coding schemes, a video signal can be encoded into a base layer and one or more enhancement layers. An enhancement layer may enhance, for example, the temporal resolution (i.e., the frame rate), the spatial resolution, or simply the quality of the video content represented by another layer or part thereof. Each layer together with all its dependent layers is one representation of the video signal, for example, at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

Scalability modes or scalability dimensions may include but are not limited to the following:

- Quality scalability: Base layer pictures are coded at a lower quality than enhancement layer pictures, which may be achieved for example using a greater quantization parameter value (i.e., a greater quantization step size for transform coefficient quantization) in the base layer than in the enhancement layer.
- Spatial scalability: Base layer pictures are coded at a lower resolution (i.e. have fewer samples) than enhancement layer pictures. Spatial scalability and quality scalability, particularly its coarse-grain scalability type, may sometimes be considered the same type of scalability.
- Bit-depth scalability: Base layer pictures are coded at lower bit-depth (e.g. 8 bits) than enhancement layer pictures (e.g. 10 or 12 bits).
- Dynamic range scalability: Scalable layers represent a different dynamic range and/or images obtained using a different tone mapping function and/or a different optical transfer function.
- Chroma format scalability: Base layer pictures provide lower spatial resolution in chroma sample arrays (e.g. coded in 4:2:0 chroma format) than enhancement layer pictures (e.g. 4:4:4 format).
- Color gamut scalability: enhancement layer pictures have a richer/broader color representation range than that of the base layer pictures - for example the enhancement layer may have UHDTV (ITU-R BT.2020) color gamut and the base layer may have the ITU-R BT.709 color gamut.
- View scalability, which may also be referred to as multiview coding. The base layer represents a first view, whereas an enhancement layer represents a second view.
- Depth scalability, which may also be referred to as depth-enhanced coding. A layer or some layers of a bitstream may represent texture view(s), while other layer or layers may represent depth view(s).
- Region-of-interest scalability (as described below).
- Interlaced-to-progressive scalability (also known as field-to-frame scalability): coded interlaced source content material of the base layer is enhanced with an enhancement layer to represent progressive source content.
- Hybrid codec scalability (also known as coding standard scalability): In hybrid codec scalability, the bitstream syntax, semantics and decoding process of the base layer and the enhancement layer are specified in different video coding standards. Thus, base layer pictures are coded according to a different coding standard or format than enhancement layer pictures. For example, the base layer may be coded with H.264/AVC and an enhancement layer may be coded with an HEVC multi-layer extension. An external base layer picture may be defined as a decoded picture that is provided by external means for the enhancement-layer decoding process and that is treated like a decoded base-layer picture for the enhancement layer decoding process. SHVC and MV-HEVC allow the use of external base layer pictures.

It should be understood that many of the scalability types may be combined and applied together. For example color gamut scalability and bit-depth scalability may be combined.

The term layer may be used in context of any type of scalability, including view scalability and depth enhancements. An enhancement layer may refer to any type of an enhancement, such as SNR, spatial, multiview, depth, bit-depth, chroma format, and/or color gamut enhancement. A base layer may refer to any type of a base video sequence, such as a base view, a base layer for SNR/spatial scalability, or a texture base view for depth-enhanced video coding.

Various technologies for providing three-dimensional (3D) video content are currently investigated and developed. It may be considered that in stereoscopic or two-view video, one video sequence or view is presented for the left eye while a parallel view is presented for the right eye. More than two parallel views may be needed for applications which enable viewpoint switching or for autostereoscopic displays which may present a large number of views simultaneously and let the viewers to observe the content from different viewpoints.

A view may be defined as a sequence of pictures representing one camera or viewpoint. The pictures representing a view may also be called view components. In other words, a view component may be defined as a coded representation of a view in a single access unit. In multiview video coding, more than one view is coded in a bitstream. Since views are typically intended to be displayed on stereoscopic or multiview autostereoscopic display or to be used for other 3D arrangements, they typically represent the same scene and are content-wise partly overlapping although representing different viewpoints to the content. Hence, inter-view prediction may be utilized in multiview video coding to take advantage of inter-view correlation and improve compression efficiency. One way to realize inter-view prediction is to include one or more decoded pictures of one or more other views in the reference picture list(s) of a picture being coded or decoded residing within a first view. View scalability may refer to such multiview video coding or multiview video bitstreams, which enable removal or omission of one or more coded views, while the resulting bitstream remains conforming and represents video with a smaller number of views than originally.

Region of Interest (ROI) coding may be defined to refer to coding a particular region within a video at a higher fidelity. ROI scalability may be defined as a type of scalability wherein an enhancement layer enhances only part of a source picture for inter-layer prediction e.g. spatially, quality-wise, in bit-depth, and/or along other scalability dimensions. As ROI scalability may be used together with other types of scalabilities, it may be considered to form a different categorization of scalability types. There exists several different applications for ROI coding with different requirements, which may be realized by using ROI scalability. For example, an enhancement layer can be transmitted to enhance the quality and/or a resolution of a region in the base layer. A decoder receiving both enhancement and base layer bitstream might decode both layers and overlay the decoded pictures on top of each other and display the final picture.

Scalability may be enabled in two basic ways. Either by introducing new coding modes for performing prediction of pixel values or syntax from lower layers of the scalable representation or by placing the lower layer pictures to a reference picture buffer (e.g. a decoded picture buffer, DPB) of the higher layer. The first approach may be more flexible and thus may provide better coding efficiency in most cases. However, the second approach may be implemented efficiently with minimal changes to single layer codecs while still achieving majority of the coding efficiency gains available. The second approach may be called for example reference frame based scalability or high-level-syntax-only scalable video coding. Essentially a reference frame based scalability codec may be implemented by utilizing the same hardware or software implementation for all the layers, just taking care of the DPB management by external means.

A scalable video encoder for quality scalability (also known as Signal-to-Noise or SNR) and/or spatial scalability may be implemented as follows. For a base layer, a conventional non-scalable video encoder and decoder may be used. The reconstructed/decoded pictures of the base layer are included in the reference picture buffer and/or reference picture lists for an enhancement layer. In case of spatial scalability, the reconstructed/decoded base-layer picture may be upsampled prior to its insertion into the reference picture lists for an enhancement-layer picture. The base layer decoded pictures may be inserted into a reference picture list(s) for coding/decoding of an enhancement layer picture similarly to the decoded reference pictures of the enhancement layer. Consequently, the encoder may choose a base-layer reference picture as an inter prediction reference and indicate its use with a reference picture index in the coded bitstream. The decoder decodes from the bitstream, for example from a reference picture index, that a base-layer picture is used as an inter prediction reference for the enhancement layer. When a decoded base-layer picture is used as the prediction reference for an enhancement layer, it is referred to as an inter-layer reference picture.

While the previous paragraph described a scalable video codec with two scalability layers with an enhancement layer and a base layer, it needs to be understood that the description can be generalized to any two layers in a scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded. Furthermore, it needs to be understood that other types of inter-layer processing than reference-layer picture upsampling may take place instead or additionally. For example, the bit-depth of the samples of the reference-layer picture may be converted to the bit-depth of the enhancement layer and/or the sample values may undergo a mapping from the color space of the reference layer to the color space of the enhancement layer.

A scalable video coding and/or decoding scheme may use multi-loop coding and/or decoding, which may be characterized as follows. In the encoding/decoding, a base layer picture may be reconstructed/decoded to be used as a motion-compensation reference picture for subsequent pictures, in coding/decoding order, within the same layer or as a reference for inter-layer (or inter-view or inter-component) prediction. The reconstructed/decoded base layer picture may be stored in the DPB. An enhancement layer picture may likewise be reconstructed/decoded to be used as a motion-compensation reference picture for subsequent pictures, in coding/decoding order, within the same layer or as reference for inter-layer (or inter-view or inter-component) prediction for higher enhancement layers, if any. In addition to reconstructed/decoded sample values, syntax element values of the base/reference layer or variables derived from the syntax element values of the base/reference layer may be used in the inter-layer/inter-component/inter-view prediction.

Scalable and multiview extensions to the first version of the High Efficiency Video Coding (HEVC) standard were finalized in 2015. The scalable video coding extension (SHVC) provides a mechanism for offering spatial, bit-depth, color gamut, and quality scalability while exploiting the inter-layer redundancy. The multiview extension (MV-HEVC) enables coding of multiview video data suitable e.g. for stereoscopic displays. For MV-HEVC, the input multiview video sequences for encoding are typically captured by a number of cameras arranged in a row. The camera projection centers are typically collinear and equally distant from each neighbor and cameras typically point to the same direction. SHVC and MV-HEVC share the same high-level syntax and most parts of their decoding process are also identical, which makes it appealing to support both SHVC and MV-HEVC with the same codec implementation. SHVC and MV-HEVC were included in HEVC version 2.

In MV-HEVC, inter-view reference pictures can be included in the reference picture list(s) of the current picture being coded or decoded. SHVC uses multi-loop decoding operation. SHVC may be considered to use a reference index based approach, i.e. an inter-layer reference picture can be included in a one or more reference picture lists of the current picture being coded or decoded (as described above).

For the enhancement layer coding, the concepts and coding tools of HEVC base layer may be used in SHVC, MV-HEVC, and/or alike. However, the additional inter-layer prediction tools, which employ already coded data (including reconstructed picture samples and motion parameters a.k.a motion information) in reference layer for efficiently coding an enhancement layer, may be integrated to SHVC, MV-HEVC, and/or alike codec.

As described previously prediction methods applied for video and/or image coding and/or decoding may be categorized into sample prediction and syntax prediction. A complementary way of categorizing different types of prediction is to consider across which domains or scalability types the prediction crosses. This categorization may lead into one or more of the following types of prediction, which may also sometimes be referred to as prediction directions:

- Temporal prediction e.g. of sample values or motion vectors from an earlier picture usually of the same scalability layer, view and component type (texture or depth).
- Inter-view prediction (which may be also referred to as cross-view prediction) referring to prediction taking place between view components usually of the same time instant or access unit and the same component type.
- Inter-layer prediction referring to prediction taking place between layers usually of the same time instant, of the same component type, and of the same view.
- Inter-component prediction may be defined to comprise prediction of syntax element values, sample values, variable values used in the decoding process, or anything alike from a component picture of one type to a component picture of another type. For example, inter-component prediction may comprise prediction of a texture view component from a depth view component, or vice versa. In another example, inter-component prediction takes place from the luma component (or sample array) to the chroma components (or sample arrays).

Inter-layer prediction may be defined as prediction in a manner that is dependent on data elements (e.g., sample values or motion vectors) of reference pictures from a different layer than the layer of the current picture (being encoded or decoded). Many types of inter-layer prediction exist and may be applied in a scalable video encoder/decoder. The available types of inter-layer prediction may for example depend on the coding profile according to which the bitstream or a particular layer within the bitstream is being encoded or, when decoding, the coding profile that the bitstream or a particular layer within the bitstream is indicated to conform to. Alternatively or additionally, the available types of inter-layer prediction may depend on the types of scalability or the type of an scalable codec or video coding standard amendment (e.g. SHVC, MV-HEVC, or 3D-HEVC) being used.

**EP 3 354 029 B1**

The types of inter-layer prediction may comprise, but are not limited to, one or more of the following: inter-layer sample prediction, inter-layer motion prediction, inter-layer residual prediction. In inter-layer sample prediction, at least a subset of the reconstructed sample values of a source picture for inter-layer prediction are used as a reference for predicting sample values of the current picture. In inter-layer motion prediction, at least a subset of the motion vectors of a source picture for inter-layer prediction are used as a reference for predicting motion vectors of the current picture. Typically, predicting information on which reference pictures are associated with the motion vectors is also included in inter-layer motion prediction. For example, the reference indices of reference pictures for the motion vectors may be inter-layer predicted and/or the picture order count or any other identification of a reference picture may be inter-layer predicted. In some cases, inter-layer motion prediction may also comprise prediction of block coding mode, header information, block partitioning, and/or other similar parameters. In some cases, coding parameter prediction, such as inter-layer prediction of block partitioning, may be regarded as another type of inter-layer prediction. In inter-layer residual prediction, the prediction error or residual of selected blocks of a source picture for inter-layer prediction is used for predicting the current picture.

Inter-view prediction may be considered to be equivalent or similar to inter-layer prediction but apply between views rather than other scalability types or dimensions. Sometimes inter-view prediction may refer only to inter-view sample prediction, which is similar to motion-compensated temporal prediction but applies between views. Sometimes inter-view prediction may be considered to comprise all types of prediction that can take place between views, such as both inter-view sample prediction and inter-view motion prediction.

In multiview-plus-depth coding, such as 3D-HEVC, cross-component inter-layer prediction may be applied, in which a picture of a first type, such as a depth picture, may affect the inter-layer prediction of a picture of a second type, such as a conventional texture picture. For example, disparity-compensated inter-layer sample value and/or motion prediction may be applied, where the disparity may be at least partially derived from a depth picture. The term view synthesis prediction may be used when a prediction block is constructed at least partly on the basis of associated depth or disparity information.

A direct reference layer may be defined as a layer that may be used for inter-layer prediction of another layer for which the layer is the direct reference layer. A direct predicted layer may be defined as a layer for which another layer is a direct reference layer. An indirect reference layer may be defined as a layer that is not a direct reference layer of a second layer but is a direct reference layer of a third layer that is a direct reference layer or indirect reference layer of a direct reference layer of the second layer for which the layer is the indirect reference layer. An indirect predicted layer may be defined as a layer for which another layer is an indirect reference layer. An independent layer may be defined as a layer that does not have direct reference layers. In other words, an independent layer is not predicted using inter-layer prediction. A non-base layer may be defined as any other layer than the base layer, and the base layer may be defined as the lowest layer in the bitstream. An independent non-base layer may be defined as a layer that is both an independent layer and a non-base layer.

A source picture for inter-layer prediction may be defined as a decoded picture that either is, or is used in deriving, an inter-layer reference picture that may be used as a reference picture for prediction of the current picture. In multi-layer HEVC extensions, an inter-layer reference picture is included in an inter-layer reference picture set of the current picture. An inter-layer reference picture may be defined as a reference picture that may be used for inter-layer prediction of the current picture. In the coding and/or decoding process, the inter-layer reference pictures may be treated as long term reference pictures. A reference-layer picture may be defined as a picture in a direct reference layer of a particular layer or a particular picture, such as the current layer or the current picture (being encoded or decoded). A reference-layer picture may but need not be used as a source picture for inter-layer prediction. Sometimes, the terms reference-layer picture and source picture for inter-layer prediction may be used interchangeably.

A source picture for inter-layer prediction may be required to be in the same access unit as the current picture. In some cases, e.g. when no resampling, motion field mapping or other inter-layer processing is needed, the source picture for inter-layer prediction and the respective inter-layer reference picture may be identical. In some cases, e.g. when resampling is needed to match the sampling grid of the reference layer to the sampling grid of the layer of the current picture (being encoded or decoded), inter-layer processing is applied to derive an inter-layer reference picture from the source picture for inter-layer prediction. Examples of such inter-layer processing are described in the next paragraphs.

Inter-layer sample prediction may be comprise resampling of the sample array(s) of the source picture for inter-layer prediction. The encoder and/or the decoder may derive a horizontal scale factor (e.g. stored in variable ScaleFactorHor) and a vertical scale factor (e.g. stored in variable ScaleFactorVer) for a pair of an enhancement layer and its reference layer for example based on the reference layer location offsets for the pair. If either or both scale factors are not equal to 1, the source picture for inter-layer prediction may be resampled to generate an inter-layer reference picture for predicting the enhancement layer picture. The process and/or the filter used for resampling may be pre-defined for example in a coding standard and/or indicated by the encoder in the bitstream (e.g. as an index among pre-defined resampling processes or filters) and/or decoded by the decoder from the bitstream. A different resampling process may be indicated by the encoder and/or decoded by the decoder and/or inferred by the encoder and/or the decoder depending on the values of the scale factor. For example, when both scale factors are less than 1, a pre-defined downsampling process may be inferred; and when both scale factors are greater than 1, a pre-defined upsampling process may be inferred. Additionally or alternatively, a different resampling process may be indicated by the encoder and/or decoded by the decoder and/or inferred by the encoder and/or the decoder depending on which sample array is processed. For example, a first resampling process may be inferred to be used for luma sample arrays and a second resampling process may be inferred to be used for chroma sample arrays.

An example of an inter-layer resampling process for obtaining a resampled luma sample value is provided in the following. The input luma sample array, which may also be referred to as the luma reference sample array, is referred through variable rlPicSampleL. The resampled luma sample value is derived for a luma sample location ( xP, yP ) relative to the top-left luma sample of the enhancement-layer picture. As a result, the process generates a resampled luma sample, accessed through variable rsLumaSample. In this example the following 8-tap filter with coefficients $f_L[\,p, x\,]$ with $p = 0 ... 15$ and $x = 0 ... 7$ is used for the luma resampling process. (In the following the notation with and without subscription may be interpreted interchangeably. For example, $f_L$ may be interpreted to be the same as fL.)

| phase p | interpolation filter coefficients | | | | | | | |
|---|---|---|---|---|---|---|---|---|
| | $f_L[\,p, 0\,]$ | $f_L[\,p, 1\,]$ | $f_L[\,p, 2\,]$ | $f_L[\,p, 3\,]$ | $f_L[\,p, 4\,]$ | $f_L[\,p, 5\,]$ | $f_L[\,p, 6\,]$ | $f_L[\,p, 7\,]$ |
| 0 | 0 | 0 | 0 | 64 | 0 | 0 | 0 | 0 |
| 1 | 0 | 1 | -3 | 63 | 4 | -2 | 1 | 0 |
| 2 | -1 | 2 | -5 | 62 | 8 | -3 | 1 | 0 |
| 3 | -1 | 3 | -8 | 60 | 13 | -4 | 1 | 0 |
| 4 | -1 | 4 | -10 | 58 | 17 | -5 | 1 | 0 |
| 5 | -1 | 4 | -11 | 52 | 26 | -8 | 3 | -1 |
| 6 | -1 | 3 | -9 | 47 | 31 | -10 | 4 | -1 |
| 7 | -1 | 4 | -11 | 45 | 34 | -10 | 4 | -1 |
| 8 | -1 | 4 | -11 | 40 | 40 | -11 | 4 | -1 |
| 9 | -1 | 4 | -10 | 34 | 45 | -11 | 4 | -1 |
| 10 | -1 | 4 | -10 | 31 | 47 | -9 | 3 | -1 |
| 11 | -1 | 3 | -8 | 26 | 52 | -11 | 4 | -1 |
| 12 | 0 | 1 | -5 | 17 | 58 | -10 | 4 | -1 |
| 13 | 0 | 1 | -4 | 13 | 60 | -8 | 3 | -1 |
| 14 | 0 | 1 | -3 | 8 | 62 | -5 | 2 | -1 |
| 15 | 0 | 1 | -2 | 4 | 63 | -3 | 1 | 0 |

The value of the interpolated luma sample rsLumaSample may be derived by applying the following ordered steps:

1. The reference layer sample location corresponding to or collocating with ( xP, yP ) may be derived for example on the basis of reference layer location offsets. This reference layer sample location is referred to as ( xRef16, yRef16 ) in units of 1/16-th sample. An exemplary method for deriving reference layer sample location corresponding to or collocating with ( xP, yP ) on the basis of reference layer location offsets is provided subsequently.

2. The variables xRef and xPhase are derived as follows:

$$xRef = ( xRef16 >> 4 )$$

$$xPhase = ( xRef16 ) \% 16$$

where ">>" is a bit-shift operation to the right, i.e. an arithmetic right shift of a two's complement integer representation of x by y binary digits. This function may be defined only for non-negative integer values of y. Bits shifted into the MSBs (most significant bits) as a result of the right shift have a value equal to the MSB of x prior to the shift operation. "%" is a modulus operation, i.e. the remainder of x divided by y, defined only for integers x and y with x >= 0 and y > 0.

3. The variables yRef and yPhase are derived as follows:

$$yRef \quad = ( \, yRef16 >> 4 \, )$$

$$yPhase = ( \, yRef16 \, ) \, \% \, 16$$

4. The variables shift1, shift2 and offset are derived as follows:

$$shift1 = RefLayerBitDepthY - 8$$

$$shift2 = 20 - BitDepthY$$

$$offset = 1 << ( \, shift2 - 1 \, )$$

where RefLayerBitDepthY is the number of bits per luma sample in the reference layer. BitDepthY is the number of bits per luma sample in the enhancement layer. "<<" is a bit-shift operation to the left, i.e. an arithmetic left shift of a two's complement integer representation of x by y binary digits. This function may be defined only for non-negative integer values of y. Bits shifted into the LSBs (least significant bits) as a result of the left shift have a value equal to 0.

5. The sample value tempArray[ n ] with n = 0 ... 7, is derived as follows:

$$yPosRL = Clip3( \, 0, \, RefLayerPicHeightInSamplesY - 1, \, yRef + n - 3 \, )$$

$$refW \quad = RefLayerPicWidthInSamplesY$$

$$tempArray[ \, n \, ] = ( \, fL[ \, xPhase, \, 0 \, ] * rlPicSampleL[ \, Clip3( \, 0, \, refW - 1, \, xRef - 3), \, yPosRL \, ]$$
$$+$$

$$fL[ \, xPhase, \, 1 \, ] * rlPicSampleL[ \, Clip3( \, 0, \, refW - 1, \, xRef - 2), \, yPosRL \, ] +$$

$$fL[ \, xPhase, \, 2 \, ] * rlPicSampleL[ \, Clip3( \, 0, \, refW - 1, \, xRef - 1), \, yPosRL \, ] +$$

$$fL[ \, xPhase, \, 3 \, ] * rlPicSampleL[ \, Clip3( \, 0, \, refW - 1, \, xRef \quad ), \, yPosRL \, ] +$$

$$fL[ \, xPhase, \, 4 \, ] * rlPicSampleL[ \, Clip3( \, 0, \, refW - 1, \, xRef + 1), \, yPosRL \, ] +$$

$$fL[ \, xPhase, \, 5 \, ] * rlPicSampleL[ \, Clip3( \, 0, \, refW - 1, \, xRef + 2), \, yPosRL \, ] +$$

$$fL[ \, xPhase, \, 6 \, ] * rlPicSampleL[ \, Clip3( \, 0, \, refW - 1, \, xRef + 3), \, yPosRL \, ] +$$

$$fL[ \, xPhase, \, 7 \, ] * rlPicSampleL[ \, Clip3( \, 0, \, refW - 1, \, xRef + 4), \, yPosRL \, ] \, ) >> shift1$$

where RefLayerPicHeightInSamplesY is the height of the source picture for inter-layer prediction in luma samples. RefLayerPicWidthInSamplesY is the width of the source picture for inter-layer prediction in luma samples.

6. The interpolated luma sample value rsLumaSample is derived as follows:

$$rsLumaSample = ( fL[\ yPhase, 0\ ]\ *\ tempArray\ [\ 0\ ] +$$

$$fL[\ yPhase, 1\ ]\ *\ tempArray\ [\ 1\ ] +$$

$$fL[\ yPhase, 2\ ]\ *\ tempArray\ [\ 2\ ] +$$

$$fL[\ yPhase, 3\ ]\ *\ tempArray\ [\ 3\ ] +$$

$$fL[\ yPhase, 4\ ]\ *\ tempArray\ [\ 4\ ] +$$

$$fL[\ yPhase, 5\ ]\ *\ tempArray\ [\ 5\ ] +$$

$$fL[\ yPhase, 6\ ]\ *\ tempArray\ [\ 6\ ] +$$

$$fL[\ yPhase, 7\ ]\ *\ tempArray\ [\ 7\ ] + offset\ ) >> shift2$$

$$rsLumaSample = Clip3(\ 0, (\ 1 << BitDepthY) - 1\ , rsLumaSample\ )$$

An inter-layer resampling process for obtaining a resampled chroma sample value may be specified identically or similarly to the above-described process for a luma sample value. For example, a filter with a different number of taps may be used for chroma samples than for luma samples.

Resampling may be performed for example picture-wise (for the entire source picture for inter-layer prediction or reference region to be resampled), slice-wise (e.g. for a reference region corresponding to an enhancement layer slice) or block-wise (e.g. for a reference region corresponding to an enhancement layer coding tree unit). The resampling of a determined region (e.g. a picture, slice, or coding tree unit in an enhancement layer picture) of a source picture for inter-layer prediction may for example be performed by looping over all sample positions of the determined region and performing a sample-wise resampling process for each sample position. However, it is to be understood that other possibilities for resampling a determined region exist - for example, the filtering of a certain sample location may use variable values of the previous sample location.

SVHC and MV-HEVC enable inter-layer sample prediction and inter-layer motion prediction. In the inter-layer sample prediction, the inter-layer reference (ILR) picture is used to obtain the sample values of a prediction block. In MV-HEVC, the source picture for inter-layer prediction acts, without modifications, as an ILR picture. In spatial and color gamut scalability of SHVC, inter-layer processing, such as resampling, is applied to the source picture for inter-layer prediction to obtain an ILR picture. In the resampling process of SHVC, the source picture for inter-layer prediction may be cropped, upsampled and/or padded to obtain an ILR picture. The relative position of the upsampled source picture for inter-layer prediction to the enhancement layer picture is indicated through so-called reference layer location offsets. This feature enables region-of-interest (ROI) scalability, in which only subset of the picture area of the base layer is enhanced in an enhancement layer picture.

SHVC enables the use of weighted prediction or a color-mapping process based on a 3D lookup table (LUT) for (but not limited to) color gamut scalability. The 3D LUT approach may be described as follows. The sample value range of each color components may be first split into two ranges, forming up to 2x2x2 octants, and then the luma ranges can be further split up to four parts, resulting into up to 8x2x2 octants. Within each octant, a cross color component linear model is applied to perform color mapping. For each octant, four vertices are encoded into and/or decoded from the bitstream to represent a linear model within the octant. The color-mapping table is encoded into and/or decoded from the bitstream separately for each color component. Color mapping may be considered to involve three steps: First, the octant to which a given reference-layer sample triplet (Y, Cb, Cr) belongs is determined. Second, the sample locations of luma and chroma may be aligned through applying a color component adjustment process. Third, the linear mapping specified for the determined octant is applied. The mapping may have cross-component nature, i.e. an input value of one color component may affect the mapped value of another color component. Additionally, if inter-layer resampling is also required, the input to the resampling process is the picture that has been color-mapped. The color-mapping may (but needs not to) map samples of a first bit-depth to samples of another bit-depth.

Inter-layer motion prediction may be realized as follows. A temporal motion vector prediction process, such as TMVP of H.265/HEVC, may be used to exploit the redundancy of motion data between different layers. This may be done as follows: when the source picture for inter-layer prediction is upsampled, the motion data of the source picture for inter-layer prediction is also mapped to the resolution of an enhancement layer in a process that may be referred to as motion field mapping (MFM). If the enhancement layer picture utilizes motion vector prediction from the base layer picture e.g. with a temporal motion vector prediction mechanism such as TMVP of H.265/HEVC, the corresponding motion vector predictor is originated from the mapped reference-layer motion field. This way the correlation between the motion data of different layers may be exploited to improve the coding efficiency of a scalable video coder. In SHVC and/or alike, inter-layer motion prediction may be performed by setting the inter-layer reference picture as the collocated reference picture for TMVP derivation. Hence, the mapped motion field is the source of TMVP candidates in the motion vector prediction process. In spatial scalability of SHVC, motion field mapping (MFM) is used to obtain the motion information for the ILR picture from that of the base-layer picture, while if no spatial scalability applies between layers the mapped motion field is identical to that of the source picture for inter-layer prediction. In MFM, the prediction dependency in source pictures for inter-layer prediction is duplicated to generate the reference picture list(s) for ILR pictures, while the motion vectors (MV) are re-scaled according to the spatial resolution ration between the ILR picture and the base-layer picture. In contrast, MFM is not applied in MV-HEVC for reference-view picture to be referenced during the inter-layer motion prediction process.

The spatial correspondence of a reference-layer picture and an enhancement-layer picture may be inferred or may be indicated with one or more types of so-called reference layer location offsets. It may be allowed to indicate the spatial correspondence of two layers with reference layer location offsets, regardless of whether there is inter-layer prediction between the layers. In HEVC, reference layer location offsets may be included in the PPS by the encoder and decoded from the PPS by the decoder. Reference layer location offsets may be used for but are not limited to achieving ROI scalability. Reference layer location offsets may comprise one or more of scaled reference layer offsets, reference region offsets, and resampling phase sets. Scaled reference layer offsets may be considered to specify the horizontal and vertical offsets between the sample in the current picture that is collocated with the top-left luma sample of the reference region in a decoded picture in a reference layer and the horizontal and vertical offsets between the sample in the current picture that is collocated with the bottom-right luma sample of the reference region in a decoded picture in a reference layer. Another way is to consider scaled reference layer offsets to specify the positions of the corner samples of the upsampled reference region relative to the respective corner samples of the enhancement layer picture. The scaled reference layer offset values may be signed. Reference region offsets may be considered to specify the horizontal and vertical offsets between the top-left luma sample of the reference region in the decoded picture in a reference layer and the top-left luma sample of the same decoded picture as well as the horizontal and vertical offsets between the bottom-right luma sample of the reference region in the decoded picture in a reference layer and the bottom-right luma sample of the same decoded picture. The reference region offset values may be signed. A resampling phase set may be considered to specify the phase offsets used in resampling process of a source picture for inter-layer prediction. Different phase offsets may be provided for luma and chroma components.

The HEVC standard specifies the semantics of the syntax elements related to reference layer location offsets as follows:

**num_ref_loc_offsets** specifies the number of reference layer location offsets that are present in the PPS. The value of num_ref_loc_offsets shall be in the range of 0 to vps_max_layers_minus1, inclusive.

**ref_loc_offset_layer_id**[ i ] specifies the nuh_layer_id value for which the i-th reference layer location offset parameters are specified. It is to be noted, that ref_loc_offset_layer_id[ i ] needs not be among the direct reference layers, for example when the spatial correspondence of an auxiliary picture to its associated primary picture is specified. The i-th reference layer location offset parameters consist of the i-th scaled reference layer offset parameters, the i-th reference region offset parameters, and the i-th resampling phase set parameters.

**scaled_ref_layer_offset_present_flag**[ i ] equal to 1 specifies that the i-th scaled reference layer offset parameters are present in the PPS. scaled_ref_layer_offset_present_flag[ i ] equal to 0 specifies that the i-th scaled reference layer offset parameters are not present in the PPS. When not present, the value of scaled_ref_layer_offset_present_flag[ i ] is inferred to be equal to 0. The i-th scaled reference layer offset parameters specify the spatial correspondence of a picture referring to this PPS relative to the reference region in a decoded picture with nuh_layer_id equal to ref_loc_offset_layer_id[ i ].

**scaled_ref_layer_left_offset**[ ref_loc_offset_layer_id[ i ] ] specifies the horizontal offset between the sample in the current picture that is collocated with the top-left luma sample of the reference region in a decoded picture with nuh_layer_id equal to ref_loc_offset_layer_id[ i ] and the top-left luma sample of the current picture in units of subWC luma samples, where subWC is equal to the SubWidthC of the picture that refers to this PPS. The value of scaled _ref_layer_left_offset[ ref_loc_offset_layer_id[ i ] ] shall be in the range of $-2^{14}$ to $2^{14} - 1$, inclusive. When not present, the value of scaled_ref_layer_left_offset[ ref_loc_offset_layer_id[ i ] ] is inferred to be equal to 0.

**scaled_ref_layer_top_offset**[ ref_loc_offset_layer_id[ i ] ] specifies the vertical offset between the sample in the current picture that is collocated with the top-left luma sample of the reference region in a decoded picture with nuh_layer_id equal to ref_loc_offset_layer_id[ i ] and the top-left luma sample of the current picture in units of subHC luma samples, where subHC is equal to the SubHeightC of the picture that refers to this PPS. The value of scaled_ref_layer_top_offset[ ref_loc_offset_layer_id[ i ] ] shall be in the range of $-2^{14}$ to $2^{14} - 1$, inclusive. When not present, the value of scaled_ref_layer_top_offset[ ref_loc_offset_layer_id[ i ] ] is inferred to be equal to 0.

**scaled_ref_layer_right_offset**[ ref_loc_offset_layer_id[ i ] ] specifies the horizontal offset between the sample in the current picture that is collocated with the bottom-right luma sample of the reference region in a decoded picture with nuh_layer_id equal to ref_loc_offset_layer_id[ i ] and the bottom-right luma sample of the current picture in units of subWC luma samples, where subWC is equal to the SubWidthC of the picture that refers to this PPS. The value of scaled_ref_layer_right_offset[ ref_loc_offset_layer_id[ i ] ] shall be in the range of $-2^{14}$ to $2^{14}$ - 1, inclusive. When not present, the value of scaled_ref_layer_right_offset[ ref_loc_offset_layer_id[ i ] ] is inferred to be equal to 0.
**scaled_ref_layer_bottom_offset[** ref_loc_offset_layer_id[ i ]] specifies the vertical offset between the sample in the current picture that is collocated with the bottom-right luma sample of the reference region in a decoded picture with nuh_layer_id equal to ref_loc_offset_layer_id[ i ] and the bottom-right luma sample of the current picture in units of subHC luma samples, where subHC is equal to the SubHeightC of the picture that refers to this PPS. The value of scaled_ref_layer_bottom_offset[ ref_loc_offset_layer_id[ i ]] shall be in the range of $-2^{14}$ to $2^{14}$ - 1, inclusive. When not present, the value of scaled_ref_layer_bottom_offset[ ref_loc_offset_layer_id[ i ] ] is inferred to be equal to 0.

Let currTopLeftSample, currBotRightSample, colRefRegionTopLeftSample, and colRefRegionBotRightSample be the top-left luma sample of the current picture, the bottom-right luma sample of the current picture, the sample in the current picture that is collocated with the top-left luma sample of the reference region in a decoded picture with nuh_layer_id equal to ref_loc_offset_layer_id[ i], and the sample in the current picture that is collocated with the bottom-right luma sample of the reference region in the decoded picture with nuh_layer_id equal to ref_loc_offset_layer_id[ i ], respectively.

When the value of scaled_ref_layer_left_offset[ ref_loc_offset_layer_id[ i ] ] is greater than 0, colRefRegionTopLeftSample is located to the right of currTopLeftSample. When the value of scaled_ref_layer_left_offset[ ref_loc_offset_layer_id[ i ] ] is less than 0, colRefRegionTopLeftSample is located to the left of currTopLeftSample.

When the value of scaled_ref_layer_top_offset[ ref_loc_offset_layer_id[ i ] ] is greater than 0, colRefRegionTopLeftSample is located below currTopLeftSample. When the value of scaled_ref_layer_top_offset[ ref_loc_offset_layer_id[ i ] ] is less than 0, colRefRegionTopLeftSample is located above currTopLeftSample.

When the value of scaled_ref_layer_right_offset[ ref_loc_offset_layer_id[ i ] ] is greater than 0, colRefRegionBotRightSample is located to the left of currBotRightSample. When the value of scaled_ref_layer_right_offset[ ref_loc_offset_layer_id[ i ] ] is less than 0, colRefRegionTopLeftSample is located to the right of currBotRightSample.

When the value of scaled_ref_layer_bottom_offset[ ref_loc_offset_layer_id[ i ] ] is greater than 0, colRefRegionBotRightSample is located above currBotRightSample. When the value of scaled_ref_layer_bottom_offset[ ref_loc_offset_layer_id[ i ] ] is less than 0, colRefRegionTopLeftSample is located below currBotRightSample.

**ref_region_offset_present_flag**[ i ] equal to 1 specifies that the i-th reference region offset parameters are present in the PPS. ref_region_offset_present_flag[ i ] equal to 0 specifies that the i-th reference region offset parameters are not present in the PPS. When not present, the value of ref_region_offset_present_flag[ i ] is inferred to be equal to 0. The i-th reference region offset parameters specify the spatial correspondence of the reference region in the decoded picture with nuh_layer_id equal to ref_loc_offset_layer_id[ i ] relative to the same decoded picture.

**ref_region_left_offset**[ ref_loc_offset_layer_id[ i ] ] specifies the horizontal offset between the top-left luma sample of the reference region in the decoded picture with nuh_layer_id equal to ref_loc_offset_layer_id[ i ] and the top-left luma sample of the same decoded picture in units of subWC luma samples, where subWC is equal to the SubWidthC of the layer with nuh_layer_id equal to ref_loc_offset_layer_id[ i ]. The value of ref_region_left_offset[ ref_loc_offset_layer_id[ i ]] shall be in the range of $-2^{14}$ to $2^{14}$ - 1, inclusive. When not present, the value of ref_region_left_offset[ ref_loc_offset_layer_id[ i ] ] is inferred to be equal to 0.

**ref_region_top_offset**[ref_loc_offset_layer_id[ i ]] specifies the vertical offset between the top-left luma sample of the reference region in the decoded picture with nuh_layer_id equal to ref_loc_offset_layer_id[ i ] and the top-left luma sample of the same decoded picture in units of subHC luma samples, where subHC is equal to the SubHeightC of the layer with nuh_layer_id equal to ref_loc_offset_layer_id[ i ]. The value of ref_region_top_offset[ ref_loc_offset_layer_id[ i ]] shall be in the range of $-2^{14}$ to $2^{14}$ - 1, inclusive. When not present, the value of ref_region_top_offset[ ref_loc_offset_layer_id[ i ]] is inferred to be equal to 0.

**ref_region_right_offset**[ ref_loc_offset_layer_id[ i ] ] specifies the horizontal offset between the bottom-right luma sample of the reference region in the decoded picture with nuh_layer_id equal to ref_loc_offset_layer_id[ i ] and the bottom-right luma sample of the same decoded picture in units of subWC luma samples, where subWC is equal to the SubWidthC of the layer with nuh_layer_id equal to ref_loc_offset_layer_id[ i ]. The value of ref_layer_right_offset [ ref_loc_offset_layer_id[ i ] ] shall be in the range of $-2^{14}$ to $2^{14}$ - 1, inclusive. When not present, the value of ref_region_right_offset[ ref_loc_offset_layer_id[ i ] ] is inferred to be equal to 0.

**ref_region_bottom_offset**[ ref_loc_offset_layer_id[ i ] ] specifies the vertical offset between the bottom-right luma sample of the reference region in the decoded picture with nuh_layer_id equal to ref_loc_offset_layer_id[ i ] and the bottom-right luma sample of the same decoded picture in units of subHC luma samples, where subHC is equal to the SubHeightC of the layer with nuh_layer_id equal to ref_loc_offset_layer_id[ i ]. The value of ref_layer_bottom_offset [ ref_loc_offset_layer_id[ i ] ] shall be in the range of $-2^{14}$ to $2^{14}$ - 1, inclusive. When not present, the value of ref_region_bottom_offset[ ref_loc_offset_layer_id[ i ] ] is inferred to be equal to 0.

Let refPicTopLeftSample, refPicBotRightSample, refRegionTopLeftSample, and refRegionBotRightSample be the top-left luma sample of the decoded picture with nuh_layer_id equal to ref_loc_offset_layer_id[ i], the bottom-right luma sample of the decoded picture with nuh_layer_id equal to ref_loc_offset_layer_id[ i ], the top-left luma sample of the reference region in the decoded picture with nuh_layer_id equal to ref_loc_offset_layer_id[ i ], and the bottom-right luma sample of the reference region in the decoded picture with nuh_layer_id equal to ref_loc_offset_layer_id[ i ], respectively.

When the value of ref_region_left_offset[ ref_loc_offset_layer_id[ i ] ] is greater than 0, refRegionTopLeftSample is located to the right of refPicTopLeftSample. When the value of ref_region_left_offset[ ref_loc_offset_layer_id[ i ] ] is less than 0, refRegionTopLeftSample is located to the left of refPicTopLeftSample.

When the value of ref_region_top_offset[ ref_loc_offset_layer_id[ i ] ] is greater than 0, refRegionTopLeftSample is located below refPicTopLeftSample. When the value of ref_region_top_offset[ ref_loc_offset_layer_id[ i ] ] is less than 0, refRegionTopLeftSample is located above refPicTopLeftSample.

When the value of ref_region_right_offset[ ref_loc_offset_layer_id[ i ] ] is greater than 0, refRegionBotRightSample is located to the left of refPicBotRightSample. When the value of ref_region_right_offset[ ref_loc_offset_layer_id [ i ] ] is less than 0, refRegionBotRightSample is located to the right of refPicBotRightSample.

When the value of ref_region_bottom_offset[ ref_loc_offset_layer_id[ i ] ] is greater than 0, refRegionBotRightSample is located above refPicBotRightSample. When the value of ref_region_bottom_offset[ ref_loc_offset_layer_id[ i ] ] is less than 0, refRegionBotRightSample is located below refPicBotRightSample.

**resample_phase_set_present_flag**[ i ] equal to 1 specifies that the i-th resampling phase set is present in the PPS. resample_phase_set_present_flag[ i ] equal to 0 specifies that the i-th resampling phase set is not present in the PPS. When not present, the value of resample_phase_set_present_flag[ i ] is inferred to be equal to 0.

The i-th resampling phase set specifies the phase offsets used in resampling process of the direct reference layer picture with nuh_layer_id equal to ref_loc_offset_layer_id[ i ]. When the layer specified by ref_loc_offset_layer_id[ i ] is not a direct reference layer of the current layer, the values of the syntax elements phase_hor_luma[ ref_loc_offset_layer_id [ i ] ], phase_ver_luma[ ref_loc_offset_layer_id[ i ] ], phase_hor_chroma_plus8[ ref_loc_offset_layer_id[ i ] ] and phase_ver_chroma_plus8[ ref_loc_offset_layer_id[ i ] ] are unspecified and shall be ignored by decoders.

**phase_hor_luma**[ ref_loc_offset_layer_id[ i ] ] specifies the luma phase shift in the horizontal direction used in the resampling process of the direct reference layer picture with nuh_layer_id equal to ref_loc_offset_layer_id[ i ]. The value of phase_hor_luma[ ref_loc_offset_layer_id[ i ] ] shall be in the range of 0 to 31, inclusive. When not present, the value of phase_hor_luma[ ref_loc_offset_layer_id[ i ] ] is inferred to be equal to 0.

**phase_ver_luma**[ ref_loc_offset_layer_id[ i ] ] specifies the luma phase shift in the vertical direction used in the resampling of the direct reference layer picture with nuh_layer_id equal to ref_loc_offset_layer_id[ i ]. The value of phase_ver_luma[ ref_loc_offset_layer_id[ i ] ] shall be in the range of 0 to 31, inclusive. When not present, the value of phase_ver_luma[ ref_loc_offset_layer_id[ i ] ] is inferred to be equal to 0.

**phase_hor_chroma_plus8**[ ref_loc_offset_layer_id[ i ] ] minus 8 specifies the chroma phase shift in the horizontal direction used in the resampling of the direct reference layer picture with nuh_layer_id equal to ref_loc_offset_layer_id[ i ]. The value of phase_hor_chroma_plus8[ ref_loc_offset_layer_id[ i ] ] shall be in the range of 0 to 63, inclusive. When not present, the value of phase hor_chroma_plus8[ ref_loc_offset_layer_id[ i ] ] is inferred to be equal to 8.

**phase_ver_chroma_plus8**[ ref_loc_offset_layer_id[ i ] ] minus 8 specifies the chroma phase shift in the vertical direction used in the resampling process of the direct reference layer picture with nuh_layer_id equal to ref_loc_offset_layer_id[ i ]. The value of phase_ver_chroma_plus8[ ref_loc_offset_layer_id[ i ] ] shall be in the range of 0 to 63, inclusive. When not present, the value of phase_ver_chroma_plus8[ ref_loc_offset_layer_id[ i ] ] is inferred to be equal to ( 4 * scaledRefRegHeight + refRegHeight / 2 ) / refRegHeight + 4, where the value of scaledRefRegHeight is equal to the value of ScaledRefRegionHeightInSamplesY derived for the direct reference layer picture with nuh_layer_id equal to ref_loc_offset_layer_id[ i ] of the picture that refers to this PPS, and the value of refRegHeight is equal to RefLayerRegionHeightInSamplesY derived for the direct reference layer picture with nuh_layer_id equal to ref_loc_offset_layer_id[ i ] of the picture that refers to this PPS.

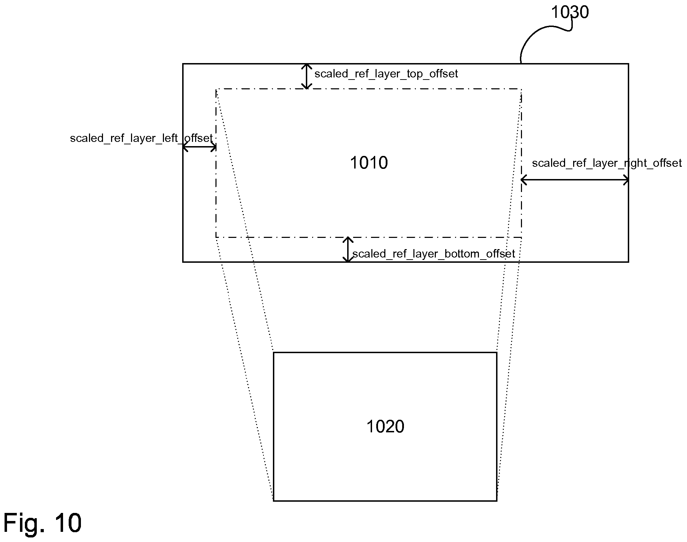

Figure 10 illustrates reference layer location offsets where on the scaled reference layer offsets are in use, while the reference region offsets are not present or equal to 0 and resampling phase sets are not present or phase values are equal to the default (inference) values. Figure 10 shows an enhancement layer 1030 and a base layer 1020, as well as scaled/upsampled base layer 1010.

For a particular direct reference layer with nuh_layer_id equal to rLId, the variables ScaledRefLayerLeftOffset, ScaledRefLayerTopOffset, ScaledRefLayerRightOffset and ScaledRefLayerBottomOffset may be set equal to scaled_ref_layer_left_offset[ rLId ], scaled_ref_layer_top_offset[ rLId ], scaledref_layer_right_offset[ rLId ] and scaled_ref_layer_bottom_offset[ rLId ], respectively, scaled (when needed) to be represented in units of luma samples of the current picture. The variables ScaledRefRegionWidthInSamplesY and ScaledRefRegionHeightInSamplesY may be set to the width and height, respectively, of the reference region within the current picture. The horizontal and vertical scale factors for the luma sample array may then be derived as the ratio of ScaledRefRegionWidthInSamplesY to the reference region width (in the luma sample array of the source picture for inter-layer prediction, here denoted ScaledRefRegionWidthInSamplesY) and the ratio of ScaledRefRegionHeightInSamplesY to the reference region height (in the luma sample array of the source picture for inter-layer prediction), respectively. In the derivation of the scale factors, the sub-sample granularity of the resampling process may be taken into account. For example, when the resampling process operates on 1/16-th sample granularity, the horizontal scale factor ScaleFactorHor for luma sample arrays may be set equal to ( ( RefLayerRegionWidthInSamplesY << 16 ) + ( ScaledRefRegionWidthInSamplesY >> 1 ) ) / ScaledRefRegionWidthIn-SamplesY, where "<<" is a bit-shift operation to the left, ">>" is a bit-shift operation to the right and "/" is an integer division operation. The scale factors for chroma sample arrays may be derived similarly.

The reference layer sample location corresponding to or collocating with ( xP, yP ) may be derived for a luma sample array on the basis of reference layer location offsets for example using the following process, where a sample location ( xP, yP ) is relative to the top-left sample of the luma component. As a result, the process generates a sample location ( xRef16, yRef16 ) specifying the reference layer sample location in units of 1/16-th sample relative to the top-left sample of the luma component. xRef16 is set equal to ( ( ( xP - ScaledRefLayerLeftOffset ) * ScaleFactorHor + addHor + (1 << 11 ) ) >> 12 ) + refOffSet Left, where addHor is set on the basis of horizontal phase offset for luma and refOffSetLeft is the left offset of the reference region in units of 1/16-th sample relative to the top-left sample of the luma sample array of the source picture for inter-layer prediction. yRef16 is set equal to ( ( ( yP - ScaledRefLayerTopOffset ) * ScaleFactorVer + addVer + (1 << 11 ) ) >> 12 ) + refOffSet Top, where addVer is set on the basis of vertical phase offset for luma and refOffSetTop is the top offset of the reference region in units of 1/16-th sample relative to the top-left sample of the luma sample array of the source picture for inter-layer prediction. The reference layer sample location corresponding to or collocating with ( xP, yP ) may be derived for a chroma sample array similarly to above.

Context-based Adaptive Binary Arithmetic Coding (CABAC), a type of entropy coder, is a lossless compression tool to code syntax elements (SEs). SEs are the information that describe how a video has been encoded and how it should be decoded. SEs are typically defined for all the prediction methods (e.g. CU/PU/TU partition, prediction type, intra prediction mode, motion vectors, and etc.) and prediction error (residual) coding information (e.g. residual skip/split, transform skip/split, coefficient_last_x, coefficient_last_y, significant_coefficient, and etc.). For example in HEVC standard, the total amount of different CABAC has the following steps:

- Binarization: Syntax elements are mapped to binary symbols (bins). Several different binarizations, such as Unary, Truncated Unary, Exp-Golomb, and fixed length (equal probability) binarization, can be used based on the expected statistics of the syntax element;
- Context modelling: The probability of each bin is estimated based on its expected properties and previously coded bins using the same context. Bins with the same behavior and distribution can share the same context. Context is usually defined based on the syntax element, bin position in syntax element, luma/chroma, block size, prediction mode, and/or neighboring information. There are about 200 contexts defined in HEVC standard. During arithmetic coding, each context has a probability state table and determines the probability of the bin that is coded with that context. There are about 128 possible probability states defined in probability state table of HEVC standard;
- Arithmetic coding: Bins are coded by arithmetic coding based on the corresponding estimated probabilities. In special cases, bins may be coded with equal probability of 50% (also known as "bypass" coding);
- Probability update: Based on the current probability state variable of the context and the value of the coded bit, the probability state variable of the context is updated. For this purpose, a pre-defined update table has been defined in HEVC standard.

A coding tool or mode called intra block copy (IBC) is similar to inter prediction but uses the current picture being encoded or decoded as a reference picture. Obviously, only the blocks coded or decoded before the current block being coded or decoded can be used as references for the prediction. The screen content coding (SCC) extension of HEVC is planned to include IBC.

The present embodiments are for coding and/or decoding of 360-degree panoramic image(s) and/or video. The embodiments are based on a fact that the full 360-degree field-of-view is covered horizontally, and hence the right-most sample column of a sample array can be considered to be adjacent to the left sample column of the sample array. Many of the embodiments can be used to improve the compression efficiency of 360-degree panoramic image(s) and/or video coding and may additionally or alternatively provide other advantages as described subsequently.

In the following some examples will be provided.

1. Inter-layer prediction

A spatially scalable image and/or video coding can be realized by resampling a reconstructed base-layer picture to serve as a reference picture for encoding/decoding (later referred as (de)coding) an enhancement-layer picture. Alternatively, spatially scalable video coding can be realized by resampling parts of a base-layer picture, such as an intra-coded block, to serve as a prediction block for (de)coding a part of an enhancement-layer picture. The resampling may include a filtering operation in which a number of base-layer samples are filtered to obtain a reference sample. Hence, such resampling may access sample locations outside picture boundaries. Reference region location offsets or alike may be used to indicate the spatial correspondence of an enhancement layer picture relative to a reference-layer picture and may cause the inter-layer resampling process to refer to samples outside the picture boundaries of the reference-layer picture. It is noted that reference region location offsets can be e.g. for combined quality and ROI scalability, i.e. can also be used for other purposes than spatial scalability. Some embodiments are presented below to accessing sample locations outside the picture boundaries of a 360-degree panoramic picture.

According to an embodiment, an encoder or a decoder reconstructs a 360-degree panoramic source picture for inter-layer prediction. Alternatively, the encoder or the decoder receives an external base-layer picture that acts as a 360-degree panoramic source picture for inter-layer prediction. The encoder or the decoder then derives an inter-layer reference picture from the source picture for inter-layer prediction, wherein the derivation comprises inter-layer resampling. Said inter-layer resampling may be performed similarly to what has been described earlier; however, derivation of resampled sample values in which sample locations outside picture boundaries are used as input in the filtering is performed differently, as described in the following. When a sample location outside a picture boundary is referred to in the filtering process, a sample value of an opposite side border region is used as illustrated in Figure 8. In other words, the sample values from the opposite side of the picture are used instead of the conventional approach of using the boundary sample when a sample horizontally outside the picture boundary is needed in the derivation of a resampled sample value.

The reference to sample locations outside a picture boundary can be handled by extending the sample array(s) of the source picture for inter-layer prediction so that the sample array(s) also contain those sample locations outside the picture boundary that may be used in inter-layer resampling. Said extending can be understood to be represented by the sample locations extending the picture horizontally in Figure 8.

Alternatively, the reference to sample locations outside a picture boundary can be handled by wrapping the horizontal sample location for referred samples. Instead of saturating negative horizontal locations to 0 and horizontal sample locations greater than width - 1 to width - 1 (i.e. the horizontal sample location of the right-most sample column of the picture), the referred horizontal sample locations outside picture boundaries may be wrapped. This means that horizontal sample locations greater than width - 1 are wrapped so that they refer to sample columns on the left side of the picture. Vice versa, horizontal sample locations less than 0 are wrapped so that they refer to sample column on the right side of the picture.

In an exemplary embodiment, the exemplary inter-layer resampling process presented earlier is used for said inter-layer resampling with a modification that step 5 of the process uses the Wrap function (as specified earlier) rather than the Clip3 function when referring to horizontal sample locations. Hence, step 5 for a 360-degree panoramic source picture for inter-layer prediction is as follows: The sample value tempArray[ n ] with n = 0 ... 7, is derived as follows:

$$yPosRL = Clip3(\ 0,\ RefLayerPicHeightInSamplesY\ -\ 1,\ yRef\ +\ n\ -\ 3\ )$$

$$refW\qquad = RefLayerPicWidthInSamplesY$$

$$tempArray[\ n\ ] = (\ fL[\ xPhase,\ 0\ ]\ *\ rlPicSampleL[\ Wrap(\ 0,\ refW\ -\ 1,\ xRef\ -\ 3),\ yPosRL\ ]$$
$$+$$
$$fL[\ xPhase,\ 1\ ]\ *\ rlPicSampleL[Wrap(\ 0,\ refW\ -\ 1,\ xRef\ -\ 2),\ yPosRL\ ]\ +$$
$$fL[\ xPhase,\ 2\ ]\ *\ rlPicSampleL[Wrap(\ 0,\ refW\ -\ 1,\ xRef\ -\ 1),\ yPosRL\ ]\ +$$
$$fL[\ xPhase,\ 3\ ]\ *\ rlPicSampleL[Wrap(\ 0,\ refW\ -\ 1,\ xRef\qquad),\ yPosRL\ ]\ +$$
$$fL[\ xPhase,\ 4\ ]\ *\ rlPicSampleL[Wrap(\ 0,\ refW\ -\ 1,\ xRef\ +\ 1),\ yPosRL\ ]\ +$$
$$fL[\ xPhase,\ 5\ ]\ *\ rlPicSampleL[Wrap(\ 0,\ refW\ -\ 1,\ xRef\ +\ 2),\ yPosRL\ ]\ +$$
$$fL[\ xPhase,\ 6\ ]\ *\ rlPicSampleL[Wrap(\ 0,\ refW\ -\ 1,\ xRef\ +\ 3),\ yPosRL\ ]\ +$$
$$fL[\ xPhase,\ 7\ ]\ *\ rlPicSampleL[Wrap(\ 0,\ refW\ -\ 1,\ xRef\ +\ 4),\ yPosRL\ ]\ )\ >>\ shift1$$

where RefLayerPicHeightInSamplesY is the height of the source picture for inter-layer prediction in luma samples. RefLayerPicWidthInSamplesY is the width of the source picture for inter-layer prediction in luma samples.

In an embodiment, it is indicated in the bitstream whether sample locations outside a picture boundary are handled as described above or conventionally in inter-layer resampling. The encoder may obtain information on the type of video content (e.g. whether the content is 360-degree panoramic or not). Alternatively or in addition, the encoder may use an algorithm to detect whether the content is 360-degree panoramic content. As response to concluding which method of handling sample locations outside picture boundaries is in use for inter-layer resampling, the encoder indicates the method in the bitstream. The signaling may be specific to handling sample locations outside picture boundaries in inter-layer resampling or may be combined with handling sample locations outside picture boundaries for inter prediction. For example, the encoder may include one or more of the following indications, or similar, into the bitstream:

- hor_wraparound_flag in a sequence-level syntax structure such as a sequence parameter set (SPS). hor_wraparound_flag specifies, for all pictures for which the SPS is the active SPS, that:

  ◦ when hor_wraparound_flag is equal to 0, horizontal sample locations outside picture boundaries are saturated to be within the picture boundaries, and,
  ◦ when hor_wraparound_flag is equal to 1, horizontal sample locations outside picture boundaries are wrapped around to be within the picture boundaries.

- hor_wraparound_flag in a picture-level syntax structure such as a picture parameter set (PPS). hor_wraparound_flag in PPS is specified similarly to the SPS flag above, but applying to all pictures for which the PPS is the active PPS. The PPS flag may be specified to apply to the picture for which the PPS is the active PPS, when that picture is used as a source picture for inter-layer prediction and/or as a reference picture for inter prediction. Alternatively or additionally, the PPS flag may be specified to apply to the source picture(s) for inter-layer prediction of the picture for which the PPS is the active PPS and/or to the reference pictures for inter prediction of the picture for which the PPS is the active PPS. Alternatively or additionally, the PPS flag may be further indicated to apply between certain pair(s) of pictures, e.g. between the picture for the PPS is the active PPS and a particular source picture for inter-layer prediction, which may be indicated e.g. with nuh_layer_id of a direct reference layer, e.g. within or connected with reference layer location offsets.

- hor_wraparound_flag in a syntax structure below the picture level such as in a prediction unit syntax structure. The hor_wraparound_flag may be conditionally present in the bitstream. In one embodiment, hor_wraparound_flag is present in PUs located within a pre-defined, concluded, or signaled (e.g. in SPS) range from the picture boundaries. The range may be concluded e.g. based on the number of taps in the inter-layer resampling filter and/or a maximum pre-defined or indicated horizontal motion vector length. In another embodiment, hor_wraparound_flag is present conditionally, when a sample location outside picture boundaries is needed in the inter prediction process. hor_wraparound_flag may apply to the horizontal sample location used in the inter prediction. The encoder may use for example a rate-distortion optimized decision for the value of hor_wraparound_flag. hor_wraparound_flag may be coded with a context-adaptive entropy coder, such as CABAC, so that other values of hor_wraparound_flag affect the encoding of the codeword.

In some embodiments, the sequence-level hor_wraparound_flag equal to 1 may indicate the presence of the picture-level hor_wrapaound_flag. If the sequence_level hor_wraparound_flag is equal to 0, the horizontal sample locations outside picture boundaries are saturated to be within the picture boundaries. Otherwise, the picture-level hor_wraparound_flag applies as specified above.

In some embodiments, the sequence-level hor_wraparound_flag is replaced by an indicator where values 0 and 1 may be specified as described above and value 2 may indicate that either saturation or wrapping around may be used as governed by the picture-level hor_wraparound_flag. The picture-level hor_wraparound_flag is present only when the sequence-level indicator is equal to 2.

In some embodiments, similarly to gating the picture-level hor_wraparound_flag with the sequence-level indicator or flag, the hor_wraparound_flag below the picture level is gated with a picture-level indicator or flag.

In an embodiment, a decoder decodes from the bitstream one or more syntax elements whether sample locations outside a picture boundary are handled as described above or conventionally in inter-layer resampling. For example, the decoder may decode from the bitstream one or more syntax elements described above. The decoder uses the syntax elements to conclude which method of handling sample locations outside picture boundaries is in use for inter-layer resampling. The signaling may be specific to handling sample locations outside picture boundaries in inter-layer resampling or may be combined with handling sample locations outside picture boundaries for inter prediction.

In an embodiment, the above-described indications may be pre-defined, e.g. in a coding standard, or indicated by an encoder and/or decoded by the decoder to apply for specific picture boundary or boundaries only, such as the right picture boundary. In some embodiments, the constraint on applying the indications only for specific picture boundary or boundaries only may apply to inter-layer resampling but not to inter prediction. For example, independently of the signaling related to the right-side of the picture, it may be pre-defined (e.g. in a coding standard) or indicated that the horizontal sample locations less than the horizontal coordinate of the left-most column of the sample array are saturated to be equal the horizontal coordinate of the left-most column. When the sample locations are saturated, the sample values of at the right side of the picture are not needed for resampling and hence it may be possible to (de)code the base-layer and enhancement-layer pictures in parallel, e.g. coding unit by coding unit in raster prediction, the (de)coding of the enhancement-layer may be delayed e.g. by one CTU row compared to the respective CTU row in the base layer.

In an example, the base layer represents 360-degree panoramic video generated e.g. by stitching of the captured video by several image sensors. The camera sensors may inherently have or may be configured to use a different spatial resolution. Alternatively or in addition, one or more regions of the panoramic video may be selected to use a different spatial resolution. Alternatively or in addition, one or more regions of the panoramic video may be selected in an encoder and/or by a video processing unit and/or by a user to be regions of interest using a detection algorithm and/or manual inputs. As a result, some but not all spatial areas of the 360-degree panoramic video may be available for encoding at a higher spatial resolution. In an example, the base layer represents 360-degree panoramic video content at a basic quality, and an enhancement layer represents a quality enhancement of a horizontal subset of the video content, such as for a 90-degree horizontal field of view. In this example, the sampling grids of the base layer and enhancement layer are identical, i.e. no spatial scaling takes place.

In an embodiment, which may be applied together with or independently of other embodiments, an enhancement layer is a region-of-interest layer, i.e. represents a subset of the spatial area of its direct reference layer(s). Signaling, such as reference layer location offsets, e.g. as specified for the scalable extension of HEVC, is used by an encoder to specify the spatial correspondence of an enhancement layer picture relative to the respective source picture for inter-layer prediction. In an embodiment, the reference region is indicated by an encoder to cross a picture boundary and areas outside the picture boundary are represented by the sample values of the opposite side of the picture, similarly to what has been described in other embodiments. This enables the use of region-of- interest enhancement layers that span across a picture boundary of the 360-degree panoramic base layer.

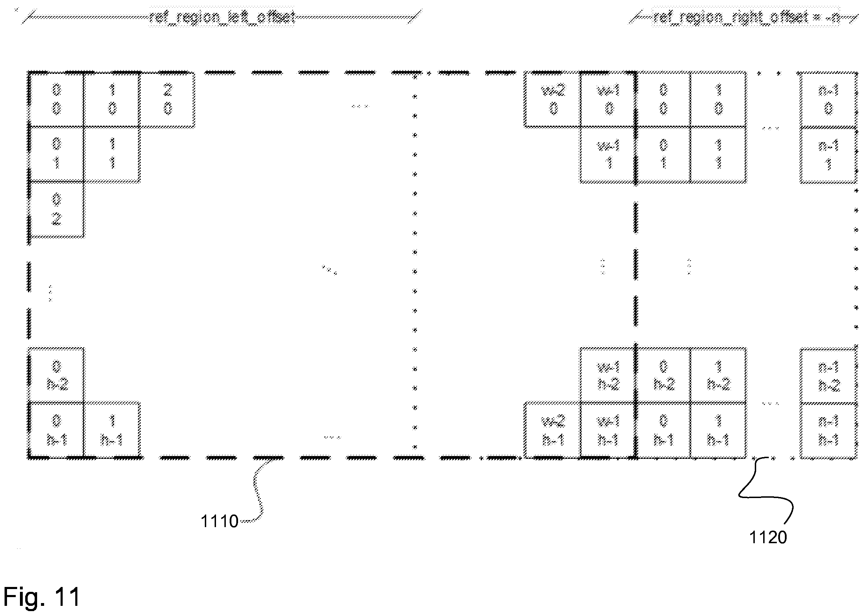

In an example, the reference region right offset (e.g. ref_region_right_offset[ ] syntax element as described earlier or similar) is set by an encoder to a negative value indicating that the right boundary of the reference region is located to the right of the right boundary of the source picture for inter-layer prediction. In this example, the sample locations that are located to the right of the right boundary of the source picture for inter-layer prediction are wrapped to be within the picture boundaries. Figure 11 shows illustrates this example, in which the dashed box indicates the picture boundaries 1110 of a sample array of a source picture for inter-layer prediction and the dotted box 1120 indicates the reference region, and the small solid boxes indicate individual samples. In Figure 11, ref_region_right_offset or similar is equal to -n (in units of samples of the sample array of the source picture for inter-layer prediction), hence the reference region spans over the right boundary of the picture by n sample columns. The sample values for these n sample columns on the right of the right boundary of the picture are copied from the n left-most sample columns of the picture, as illustrated in Figure 11.

In an example, the reference region left offset (e.g. ref_region_left_offset[] syntax element as described earlier or similar) is set to a negative value indicating that the left boundary of the reference region is located to the left of the left boundary of the source picture for inter-layer prediction. In this example, the sample locations that are located to the left of the left boundary of the source picture for inter-layer prediction are wrapped to be within the picture boundaries.

In an example, the scaled reference layer offset values are set by an encoder instead of or in addition to reference region offset values to indicate that an enhancement layer picture corresponds to a region in the reference-layer picture that crosses the picture boundary to the opposite side of the reference-layer picture. Likewise, a decoder may decode scaled reference layer offset values instead of or in addition to reference region offset values, whereby the values indicate that an enhancement layer picture corresponds to a region in the reference-layer picture that crosses the picture boundary to the opposite side of the reference-layer picture. For example, the scaled reference layer left offset may be set to a negative value and the scaled reference layer right offset may be set to a positive value, thus indicating that right boundary of the reference-layer picture corresponds to a sample column to the left of the right boundary of the enhancement layer picture. Such an arrangement may signify, similarly to other embodiments and examples, that sample values of the opposite border region of the reference-layer picture are used when accessing sample locations to the right of the sample column indicated by the scaled reference layer right offset. In another example, the scaled reference layer left offset may be set to a positive value and the scaled reference layer right offset may be set to a negative value, thus indicating that left boundary of the reference-layer picture corresponds to a sample column to the right of the left boundary of the enhancement layer picture. Such an arrangement may signify, similarly to other embodiments and examples, that sample values of the opposite border region of the reference-layer picture are used when accessing sample locations to the left of the sample column indicated by the scaled reference layer left offset.

In an embodiment, which may be applied together with or independently of other embodiments, an enhancement layer is a region-of-interest layer, i.e. represents a subset of the spatial area of its direct reference layer(s). Signaling, such as reference layer location offsets, e.g. as specified for the scalable extension of HEVC, is used by an encoder to specify the spatial correspondence of an enhancement layer picture relative to the respective source picture for inter-layer prediction. In an embodiment, the reference region is indicated by an encoder to cross a picture boundary. The motion field for the areas outside the picture boundary are represented by the motion field of the opposite side of the picture. This enables inter-layer motion prediction in region-of-interest enhancement layers that span across a picture boundary of the 360-degree panoramic base layer. For example, Figure 11 may be considered to represent the motion field of the source picture for inter-layer prediction, in which the dashed box indicates the picture boundaries of the motion field of the source picture for inter-layer prediction and the dotted box indicates the reference region, and the small solid boxes indicate motion vectors at the granularity of the motion field (e.g. at a grid of 16x16 block of luma samples). In Figure 11, ref_region_right_offset or similar is equal to -n (in units of the motion field grid), hence the reference region spans over the right boundary of the picture by n motion field columns. The motion vectors for these n motion field columns on the right of the right boundary of the picture are copied from the n left-most motion field columns of the picture, as illustrated in Figure 11.

In an embodiment, which may be applied together with or independently of other embodiments, a decoder decodes reference layer location offsets, e.g. as specified for the scalable extension of HEVC, to conclude the spatial correspondence of an enhancement layer picture relative to the respective source picture for inter-layer prediction. In an embodiment, the reference region is decoded by a decoder to cross a picture boundary and areas outside the picture boundary are represented by the sample values of the opposite side of the picture, similarly to what has been described in other embodiments. This enables the use of region-of- interest enhancement layers that span across a picture boundary of the 360-degree panoramic base layer.

In an example, the reference region right offset (e.g. ref_region_right_offset[ ] syntax element as described earlier or similar) is decoded by a decoder to be a negative value indicating that the right boundary of the reference region is located to the right of the right boundary of the source picture for inter-layer prediction. In this example, the sample locations that are located to the right of the right boundary of the source picture for inter-layer prediction are wrapped to be within the picture boundaries.

In an example, the reference region left offset (e.g. ref_region_left_offset[] syntax element as described earlier or similar) is decoded by a decoder to be a negative value indicating that the left boundary of the reference region is located to the left of the left boundary of the source picture for inter-layer prediction. In this example, the sample locations that are located to the left of the left boundary of the source picture for inter-layer prediction are wrapped to be within the picture boundaries.

In an embodiment, the reference region spanning over the picture boundary or boundaries of a source picture for inter-layer prediction is handled by extending the sample array(s) of the source picture for inter-layer prediction as described earlier. In an embodiment, the reference region spanning over the picture boundary or boundaries of a source picture for inter-layer prediction is handled by wrapping the horizontal sample location for referred samples as described earlier and as exemplified by the inter-layer resampling process using the Wrap function instead of the Clip3 function when referring to horizontal sample locations (in Step 5 of the process). In an embodiment, a reference region is generated by copying sample values from the source picture for inter-layer prediction as illustrated with Figure 11.

In various embodiments, a mixture of the above-mentioned two techniques (i.e. extending the sample array(s) and wrapping the horizontal sample location for referred samples), can be utilized. The margins of the extended sample array(s) can be extended e.g. to cover the referred sample locations by the inter-layer resampling process when the reference region is within the source picture for inter-layer prediction. Sample location wrapping is used for reference regions that are at least partly outside picture boundaries of the source picture for inter-layer prediction. This combination method may enable faster memory access than the approach of only using wrapping of the sample location.

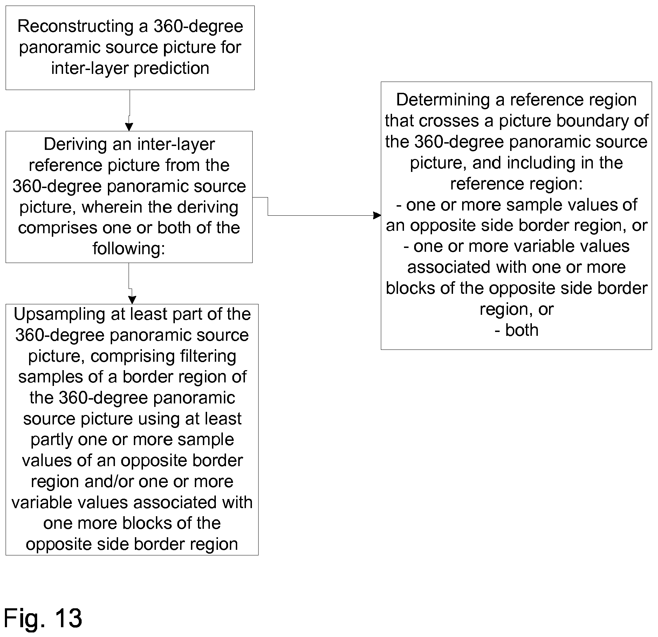

According to an embodiment, shown in Figure 13, a method comprises reconstructing a 360-degree panoramic source picture for inter-layer prediction; deriving an inter-layer reference picture from the 360-degree panoramic source picture, wherein said deriving comprises one or both of the following: upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region; determining a reference region that crosses a picture boundary of the 360-degree panoramic source picture, and including one or more sample values of an opposite side border region and/or variable values associated with one or more blocks of the opposite side border region in the reference region.

## 2. In-picture prediction

### 2.1 Intra prediction

According to an embodiment, which may be used together with or independently of other embodiments, the reconstructed or decoded sample values from the opposite side of the picture are used as source for intra prediction. Said intra prediction may be a part of encoding or decoding a block or a coding unit.

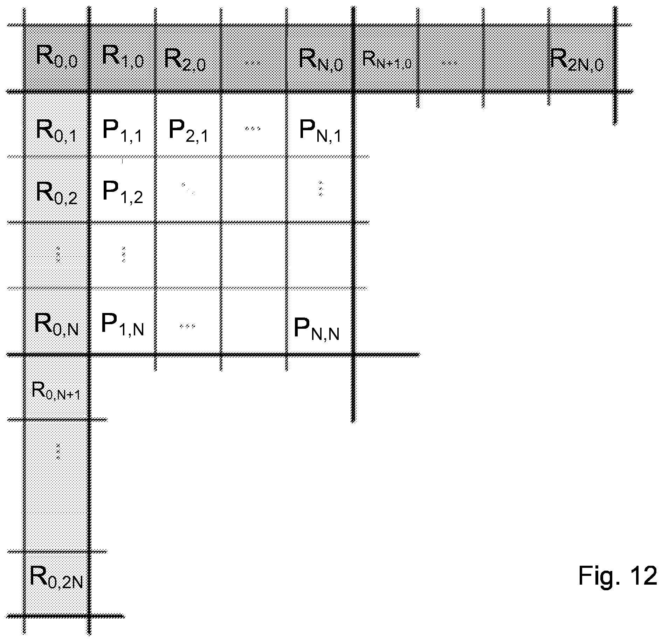

Figure 12 illustrates an example of reference samples $R_{x,y}$ used in prediction to obtain predicted samples $P_{x,y}$ for a block size of N x N samples, based on which some of the following embodiments are described. The notations $R_{x,y}$ and $R(x,y)$ are used interchangeably. Likewise, the notations $P_{x,y}$ and $P(x,y)$ are used interchangeably. Any of the following embodiments or a combination thereof may be used in using reconstructed or decoded sample values from the opposite side of the picture as source for intra prediction:

- Wrap-around of the top-right reference samples at the right-most blocks (e.g. right-most PUs) of the picture. When the right-most sample column of the current N x N block is the right-most in the picture: Set R(N+x,y) to Q(x-1,j) for x = 1..N, where Q(x,y) is a sample array of the current decoded picture (with a coordinate system starting at 0) and j is the last sample row of the above block (e.g. PU) in the coordinates of the current decoded picture. In other words, when the reference sample locations for intra prediction are outside a picture boundary, the respective sample values are obtained from the opposite side of the picture.

- Usage of the left-most sample column of the picture to obtain the top-right reference samples at the right-most block (e.g. the right-most PU) of the picture. The left-most sample column may be selected according to the angular prediction mode.

- Usage of the left-most picture column of the picture as reference samples R(0,y) for y = 0 .. 2N in a block coding mode (e.g. a PU coding mode) for (de)coding a horizontally mirrored block. In this coding mode, the reference samples R(x,0) for x = 1 .. 2N are set equal to Q(w-x,j), where w is the width of the sample array and j is the last sample row of the above block (e.g. PU) in the coordinates of the current decoded picture. An encoder may e.g. perform an RD-optimal decision whether or not to use this coding mode. When using this coding mode, an encoder may operate as follows: The encoder first mirrors the uncompressed block to be coded horizontally. The encoder then selects an intra prediction mode conventionally using the available reference samples R obtained above and the mirrored block. The encoder encodes one or more indications of the mirrored coding mode and the intra prediction mode into the bitstream; i.e., an indication of the mirrored coding may be coded as a separate syntax element, or it may be included as one or more prediction modes together with intra prediction mode syntax element(s). The selection of the conventional intra prediction mode may e.g. be performed using RD optimization. The encoder creates the prediction block according to the selected intra prediction mode, and may then code the prediction error block. The encoder also reconstructs a mirrored reconstructed block from the prediction block and from the reconstructed prediction error block, if any. The encoder then horizontally mirrors the mirrored reconstructed block, which is then stored in the sample array Q and may be used as a source for prediction. A decoder may operate as follows: The decoder first decodes one or more indications of the mirrored coding mode and the intra prediction mode from the bitstream. When a mirrored coding mode is in use, the decoder generates the reference samples R as described above. The decoder then reconstructs a prediction block on the basis of the intra prediction mode and the reference samples R. The decoder decodes a prediction error block, when it is available in the bitstream. The decoder also reconstructs a mirrored reconstructed block from the prediction block and from the decoded prediction error block, if any. The decoder then horizontally mirrors the mirrored reconstructed block, which is then stored in the sample array Q and may be used as a source for prediction.

- Changing the angular prediction modes for the right-most block (e.g. PU) so that interpolation between the available samples on the left, top and right side of the block (e.g. PU) being (de)coded is performed in the indicated angular direction.

- New angular intra prediction directions from right and bottom-right, in use for the right-most blocks (e.g. right-most PUs). These new angular intra prediction directions use the samples from the left-most sample column of the picture as a source for intra prediction.

In an embodiment, the above-described intra prediction embodiments are applied to reconstructed or decoded sample values prior to loop filtering. In another embodiment, the above-described intra prediction embodiments are applied to reconstructed or decoded sample values that have undergone loop filtering. In yet another embodiment, the above-described intra prediction embodiments are applied to reconstructed or decoded sample values that have undergone certain loop filtering, such as deblocking, but prior to applying other loop filtering, such as sample adaptive offset. In some embodiments, it is pre-defined e.g. in a coding standard in which order the above-described intra prediction takes place in relation to the stages of loop filtering, while in other embodiments, an encoder indicates in the bitstream and a decoder decodes from the bitstream the order in which the above-described intra prediction takes place in relation to the stages of loop filtering.

## 2.2. Loop filtering

According to an embodiment, which may be used together with or independently of other embodiments, intermediate reconstructed or decoded sample values and/or variable values from the opposite side of the picture are used for filtering intermediate reconstructed or decoded sample values of a border area of the picture.

In an embodiment, deblocking filtering may be applied across the vertical edge of the picture. For that purpose, the right-most block of the picture can be regarded to be adjacent the left-most block of the picture (at the same vertical location of the block grid), and the right-most block of the picture can be regarded to reside to the left of the left-most block of the picture. Likewise, the right-most N sample columns of the picture can be regard to be adjacent to the left-most N sample columns of the picture, where N may be the number of samples affected by the deblocking filter along a vertical boundary.

The deblocking filtering utilizes sample values at a left-side border region of the picture and at a right-side border region of the picture, and modifies one or both of the left-side border region and the right-side border region. Additionally or alternatively, the deblocking filtering utilizes variable values, such as a coding mode and/or a quantization parameter value, of the left-side border region of the picture and of the right-side border region of the picture. Any type of deblocking filter may be used with this embodiment, such as the deblocking filter outlined earlier.

In an embodiment the loop filtering makes use of the motion vector values of blocks at opposite sides of the picture, for example when determining the boundary strength for deblocking loop filtering. In this embodiment, prior to using the motion vector values of two blocks horizontally at opposite sides of the picture in the filtering (at the same vertical location of the block grid), they can be conditionally normalized to point to the same direction in a cylindrical representation of the image. For example, if a right-most block of the picture has a negative horizontal motion vector component that points to the left-side of the picture, it may be normalized to be the positive horizontal motion vector component that points to the same location when wrapping the sample locations around as illustrated in Figure 8. The normalization may take for example when the horizontal motion vector components of the blocks at the opposite sides of the picture have a different sign and when the absolute value of the normalized horizontal motion vector component is smaller than the absolute value of the non-normalized (original) horizontal motion vector component.

In an embodiment, instead of or in addition to applying loop filtering as described in the embodiment above, post-filtering is similarly applied in a manner where reconstructed or decoded sample values and/or variable values from the opposite side of the picture are used for filtering reconstructed or decoded sample values of a border area of the picture. The post-filtered sample values are applied e.g. for the displaying process but do not affect the sample values of the decoded reference pictures used in (de)coding.

2.3. Context adaptation in context-aware entropy (de)coding

According to an embodiment, which may be used together with or independently of other embodiments, the information from the opposite side of the picture is utilized in one or both of the following ways:

- In estimating the probability of one or more bins of a right-most block of the picture, the probability is estimated based on its expected properties and previously coded bins using the same context. The previously coded bins comprise those originating from the opposite side of the picture.
- In updating the probability state variable of the context and the value of the coded bin, the probability state variable of the context is update at least partly based on one or more context state(s) of the opposite side of the picture.

In an embodiment, an encoder indicates in the bitstream and/or a decoder decodes from the bitstream whether sample locations outside a picture boundary and/or parameters associated to locations outside a picture boundary are handled as described above in embodiments relating to in-picture prediction. The indications may be specific to a prediction type (e.g. intra prediction, loop filtering, entropy coding) or may be combined with other prediction type(s) (e.g. there may be an indication that jointly indicates that samples outside picture boundaries are obtained from the opposite side of the picture for fractional sample interpolation and/or motion vectors over picture boundaries and that deblocking loop filtering applies over the vertical boundaries of the picture, as described earlier). Additionally or alternatively, the indications may be specific to a boundary or boundaries, which may be pre-defined (e.g. in a coding standard) or indicated. Indications similar to what was described above for embodiments relating to inter-layer prediction may be used for in-picture prediction.

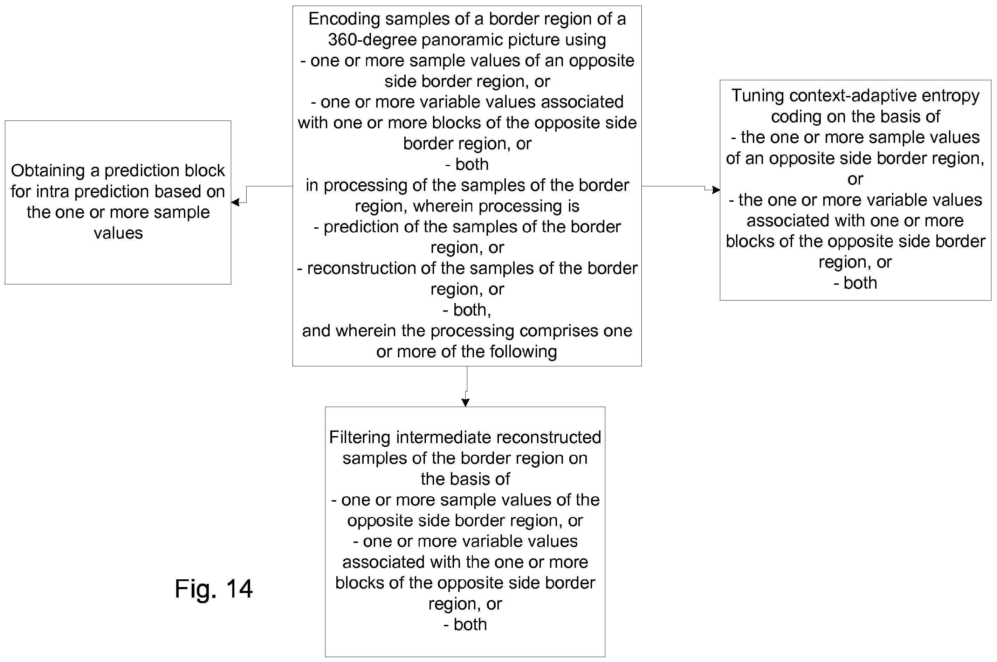

According to an embodiment, shown in Figure 14, a method comprises coding or decoding samples of a border region of a 360-degree panoramic picture; said coding or decoding utilizing one or more sample values of an opposite side border region and/or one or more variable values associated with one or more blocks of the opposite side border region in the prediction and/or reconstruction of the samples of the border region, wherein said prediction and/or reconstruction comprises one or more of the following:

- obtaining a prediction block for intra prediction based on the one or more sample values;
- filtering intermediate reconstructed samples of the border region on the basis of the one or more sample values of the opposite side border region and/or the one or more variable values associated with the one or more blocks of the opposite side border region;
- tuning context-adaptive entropy coding or decoding on the basis of the one or more sample values of an opposite side border region and/or the one or more variable values associated with one or more blocks of the opposite side border region.

The present embodiments are described in more detail below.

**Complementing embodiments for samples outside picture boundaries**

Utilization of the effective picture area

The width and height of a decoded picture may have certain constraints, e.g. so that the width and height are multiples of a (minimum) coding unit size. For example, HEVC the width and height of a decoded picture are multiples of 8 luma samples. If the encoded picture has extents that do not fulfil such constraints, the (de)coding may still be performed with a picture size complying with the constraints but the output may be performed by cropping the unnecessary sample lines and columns. In HEVC, this cropping can be controlled by the encoder using the so-called conformance cropping window feature. The conformance cropping window is specified (by the encoder) in the SPS and when outputting the pictures the decoder is required to crop the decoded pictures according to the conformance cropping window.

In an embodiment, the wrap around behavior in the above-described embodiments uses the effective picture area, e.g. defined by the conformance cropping window, rather than the decoded picture area. For example, instead of using 0 is the horizontal location of the left-most sample column, the left side of the conformance cropping window is used in the methods above. Similarly, instead of using pic_width_in_luma_samples, the horizontal sample location of the right-most sample column of the conformance cropping window is used in the methods above.

In an embodiment, an encoder indicates in the bitstream and/or the decoder decodes from the bitstream that the wrap around behavior in the above-described embodiments applies to the effective picture area. The encoder indicates and/or the decoder decodes from the bitstream indications defining the effective picture area, e.g. indications on conformance cropping window.

Phase-shifted wraparound

The 360-degree panoramic content may be created by stitching the captured pictures of more than one image sensor. As a consequence, the signal across stitching seams might not represent a perfectly continuous signal but rather imperfections such as phase shifting may happen. In an embodiment, the encoder may encode into the bitstream and the decoder may decode from the bitstream information on the integer and/or fractional sample location shifting to be used when wrapping around the sample locations going over picture boundaries. For example, the information may be encoded into and/or decoded from a sequence-level syntax structure, such as SPS, and/or from a picture-level syntax structure, such as PPS. The sample values at the fractional sample positions may be generated using conventional operation (i.e. saturation) for sample locations outside picture boundaries. After generating these sample values, they can be used as if they were full-pixel sample values for obtaining input sample values for fractional sample interpolation.

Inter-view prediction in stereoscopic 360-degree video

Two views of 360-degree panoramic video with a disparity between the views may be coded for example to obtain a depth sensation when the content is viewed on a stereoscopic display, such as a virtual reality headset. It needs to be understood that even though embodiments have been described with reference to inter prediction, the embodiments can similarly apply to inter-view prediction. This can be beneficial in coding two or more views of 360-degree panoramic video with inter-view prediction between the views. Furthermore, it needs to be understood that embodiments described in relation to ROI scalability can be applied similarly to an enhancement layer representing 360-degree panoramic video (e.g. of a second view) rather than a region of the base layer, where the base layer may represent e.g. a first view.

Intra block copy

In an embodiment, which may be applied together with or independently of other embodiments, an intra block copy vector points partly or fully outside the picture boundary and/or points to a sub-pixel sample location causing reconstruction of sample values by filtering in which at least a part of the sample values originate from locations outside the picture boundary. Sample values outside the picture boundary are obtained from the boundary region at the opposite side of the picture, similarly to other embodiments.

In an embodiment, the reference block search for an IBC encoding process is constrained so that sample locations outside the picture boundary are not referred when the respective sample locations at the opposite side of the picture have not been encoded or decoded yet. It may be disallowed in a video coding specification to include such IBC motion vectors in a bitstream that would cause reference to sample locations outside the picture boundary when the respective sample locations at the opposite side of the picture have not been encoded or decoded yet.

In an embodiment, the handling of the sample locations outside the picture boundary is conditioned on whether the respective sample locations at the opposite side of the picture have been encoded or decoded. When the respective sample locations at the opposite side of the picture have been encoded or decoded, the sample values at the opposite side of the picture are used when referring to the sample location outside the picture boundary in creating a prediction block in IBC. When the respective sample locations at the opposite side of the picture have not been encoded or decoded, a conventional approach, such as boundary sample extension or saturation of the sample location to be within the picture boundaries, is used when referring to the sample location outside the picture boundary in creating a prediction block in IBC.

Wraparound of vertical sample locations

It needs to be understood that the methods presented earlier can be similarly applied to the vertical direction additionally or alternatively. This can be useful e.g. for video content that comprises 360 degrees for both horizontal and vertical directions or only for vertical direction, for example when the horizontal axis represents 360 degrees and the vertical axis represents 180 degrees. In this case the embodiments can be applied in both the horizontal and the vertical direction. In another example, a capturing device is capable of capturing 360 degrees along a first axis and less than 180 degrees along a second axis (orthogonal to the first axis) and the capturing device was tilted so that the 360-degree capturing took place in vertical direction, in which case the embodiments can be applied to the vertical direction but not the horizontal direction.

**Disparity-compensated inter-view prediction of stereoscopic 360-degree video**

An embodiment, which may be applied together with or independently of other embodiments, for disparity-compensated inter-view prediction is described next. When SHVC coding tools (or similar) are enabled to be used for inter-view prediction, it is possible to realize disparity-compensated inter-view prediction as follows. More specifically, the reference layer location offsets feature of SHVC (or similar) can be used to realize for disparity-compensated inter-view motion prediction. The offsets are chosen according to the disparity between views.

In encoders and/or decoders according to the embodiments, a motion field of a picture in one view is mapped to be used as the temporal motion vector predictor of a picture in another view by compensating the disparity between views. An encoder may indicate the mapping using reference layer location offsets. A decoder may decode the mapping from reference layer location offsets parsed from the bitstream. One or more of the previously described embodiments for inter-layer prediction using wrapped-around locations for reference picture resampling and/or motion field mapping are used in the encoder and decoder.

In an embodiment, which may be applied together with or independently of other embodiments, an encoder may perform one or more of the following steps:

- A disparity value may be derived or estimated.
- The syntax elements for the scaled reference layer left offset and/or scaled reference layer right offset are set equal to the disparity value, also taking into account the correct sign.
- The syntax elements for the scaled reference layer top offset and scaled reference layer bottom offset are set equal to 0.

In an embodiment, which may be applied together with or independently of other embodiments, an encoder may perform one or more of the following steps:

- A disparity value may be derived or estimated.
- The syntax element for the reference region left offset and/or reference region right offset are set equal to the disparity value, also taking into account the correct sign.
- The syntax elements for the reference region top offset and reference region bottom offset are set equal to 0.

An encoder may derive the disparity value for example from picture of one or more access unit using but not limited to one or more of the following ways:

- An average disparity derived from one or more depth maps associated with said pictures.
- A disparity derived or estimated from camera parameters applying to said pictures.
- An average estimated disparity between the views, where the estimation may be performed for example using a stereo matching algorithm.
- An average disparity derived from inter-view motion vector applying between said pictures of different views.

In the above, instead of an average disparity, another mathematical and/or logical operation may be used, such as media or maximum.

In an embodiment, which may be applied together with or independently of other embodiments, an encoder may perform one or more of the following steps:

- An average disparity may be derived or estimated for one or more pictures.
- The syntax elements for the scaled reference layer left offset and scaled reference layer right offset are set equal to the average disparity, also taking into account the correct sign.
- The syntax elements for the scaled reference layer top offset and scaled reference layer bottom offset are set equal to 0.

In an embodiment, which may be applied together with or independently of other embodiments, an encoder may perform one or more of the following steps:

- The encoder may create two occurrences of the inter-layer reference picture (the base-view picture) in the reference picture lists. One occurrence is a conventional is a conventional inter-layer reference picture (without resampling) in MV-HEVC. The other occurrence is resampled as determined by reference layer location offsets. The encoder may indicate the creation of the two occurrences in the bitstream through using reference picture list reordering syntax or similar. The encoder may order the second occurrence to appear last in one of or both the reference picture lists.
- The encoder uses the resampled reference picture only as a collocated picture for TMVP. The encoder may indicate the collocated picture in a slice header, for example. The encoder does not use the resampled picture as reference for sample prediction.

In an embodiment, which may be applied together with or independently of other embodiments, an encoder may derive the disparity value or the reference layer location offsets on the basis of actual disparity between the pictures of different views and a collocation pre-compensation offset determined as follows. HEVC TMVP is such that the default location in the collocated picture to pick the motion vector is bottom-right of the location of the current PU (being encoded or decoded). Only if no motion vector is available in the default TMVP candidate location, e.g. when the corresponding block is intra-coded, the (spatially collocating) location of the current PU is considered. The default location for the TMVP candidate may be considered to cause a kind of a shift from the actual disparity towards the bottom-right corner. The encoder may therefore pre-compensate the choice of the TMVP default location in the generated disparity value or the reference layer location offsets. For example, the encoder may pre-compensate by 8 luma samples both horizontally and vertically, i.e. "move" the window specified by the reference layer location offsets towards top-left by 8 luma samples horizontally and vertically.

It needs to be understood that the above-described embodiments can be similarly applied to multiview video, i.e. to more than two views, too.

The present embodiments provide advantages. For example, compression efficiency may be improved. In addition, there is a flexibility in determining the reference region within the 360-degree panoramic base layer that is enhanced in an enhancement layer. For example, embodiments enable region-of-interest enhancement layers that span across a picture boundary of the 360-degree panoramic base layer. In another example, a visible discontinuity between the left boundary and the right boundary of a 360-degree panoramic image is reduced or concealed by deblocking filtering, which may improve the subjective quality when these boundaries are displayed adjacent to each other.

In the above, some example embodiments have been described with reference to an encoder, it needs to be understood that the resulting bitstream and the decoder have corresponding elements in them. Likewise, where the example embodiments have been described with reference to a decoder, it needs to be understood that the encoder has structure and/or computer program for generating the bitstream to be decoded by the decoder.

In the above, some embodiments have been described in relation to the terms base layer and/or base-layer picture. It needs to be understood that these embodiments similarly apply to any direct reference layer and/or reference-layer picture, respectively.

In the above, some embodiments have been described in relation to two layers, such as the base layer and an enhancement layer. It needs to be understood that these embodiments apply similarly to any number of direct reference layers for an enhancement layer. It also needs to be understood that these embodiments apply similarly to any number of enhancement layers. For example, more than one ROI enhancement layer may be (de)coded. Furthermore, each ROI enhancement layer may correspond to a different spatial subset of the 360-degree panoramic base layer.

In the above, some embodiments have been described in relation to inter-layer motion prediction. It needs to be understood that these embodiments are not limited to motion prediction but similarly apply to any other type of inter-layer parameter prediction.

In the above, the terms reconstructed sample and reconstructed picture have mainly been used in relation to encoding, where samples and pictures are reconstructed as a part of an encoding process and have identical values to the decoded samples and decoded pictures, respectively, resulting from a decoding process. The term reconstructed sample may be used interchangeably with the term decoded sample. The term reconstructed picture may be used interchangeably with the term decoded picture.

In the above, some embodiments have been described in relation to video (de)coding methods. It needs to be understood that these embodiments similarly apply to image (de)coding methods, where a single image is coded and/or a single coded image or access unit (which may contain several coded images of different scalability layers) is decoded.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

It is obvious that the present invention is not limited by the above-presented embodiments, but solely by the subject-matter falling within the scope of the appended claims.

In the following, further aspects of this disclosure are provided for illustrative purposes. These are not claims, nor are they to be confused with subject-matter defining the extent of protection of the present invention. According to a first aspect, there is provided a method comprises

- reconstructing a 360-degree panoramic source picture for inter-layer prediction;
- deriving an inter-layer reference picture from the 360-degree panoramic source picture, wherein the deriving comprises one or both of:

  ∘ upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region;
  ∘ determining a reference region that crosses a picture boundary of the 360-degree panoramic source picture, and including in the reference region one or both of the following:

  ▪ one or more sample values of an opposite side border region;
  ▪ one or more variable values associated with one or more blocks of the opposite side border region.

According to a second aspect, there is provided a method comprises

- encoding samples of a border region of a 360-degree panoramic picture, wherein the encoding comprises utilizing one or both of the following

  ▪ one or more sample values of an opposite side border region:
  ▪ one or more variable values associated with one or more blocks of the opposite side border region

  in processing of the samples of the border region;
- wherein said processing of the samples is one or both of the following: prediction of the samples of the border region, reconstruction of the samples of the border region, and wherein the processing comprises one or more of the following:

  ∘ obtaining a prediction block for intra prediction based on the one or more sample values;
  ∘ filtering intermediate reconstructed samples of the border region on the basis of one or both of the following:

  ▪ the one or more sample values of the opposite side border region;
  ▪ the one or more variable values associated with the one or more blocks of the opposite side border region;

  ∘ tuning context-adaptive entropy coding on the basis of one or both of the following:

  ▪ the one or more sample values of an opposite side border region;
  ▪ the one or more variable values associated with one or more blocks of the opposite side border region.

According to a third aspect, there is provided a method comprises

- decoding samples of a border region of a 360-degree panoramic picture, wherein the decoding comprises utilizing one or both of the following

- one or more sample values of an opposite side border region:
- one or more variable values associated with one or more blocks of the opposite side border region

in processing of the samples of the border region;
- wherein said processing of the samples is one or both of the following: prediction of the samples of the border region, reconstruction of the samples of the border region, and wherein the processing comprises one or more of the following:

  ○ **obtaining** a prediction block for intra prediction based on the one or more sample values;
  ○ filtering intermediate reconstructed samples of the border region on the basis of one or both of the following:

    - the one or more sample values of the opposite side border region;
    - the one or more variable values associated with the one or more blocks of the opposite side border region;

  ○ tuning context-adaptive entropy decoding on the basis of one or both of the following:

    - the one or more sample values of an opposite side border region;
    - the one or more variable values associated with one or more blocks of the opposite side border region.

According to a fourth aspect, there is provided an apparatus comprising at least one processor; at least one memory including computer program code, the at least one memory and the computer program code configured to, with the at least one processor, cause the apparatus to perform at least the following:

- reconstructing a 360-degree panoramic source picture for inter-layer prediction;
- deriving an inter-layer reference picture from the 360-degree panoramic source picture, wherein the deriving comprises one or both of:

  ○ upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region;
  ○ determining a reference region that crosses a picture boundary of the 360-degree panoramic source picture, and including in the reference region one or both of the following:

    - one or more sample values of an opposite side border region;
    - one or more variable values associated with one or more blocks of the opposite side border region.

According to a fifth aspect, there is provided an apparatus comprising at least one processor; at least one memory including computer program code, the at least one memory and the computer program code configured to, with the at least one processor, cause the apparatus to perform at least the following:

- encoding samples of a border region of a 360-degree panoramic picture, wherein the encoding comprises utilizing one or both of the following

  - one or more sample values of an opposite side border region:
  - one or more variable values associated with one or more blocks of the opposite side border region

in processing of the samples of the border region;
- wherein said processing of the samples is one or both of the following: prediction of the samples of the border region, reconstruction of the samples of the border region, and wherein the processing comprises one or more of the following:

  ○ obtaining a prediction block for intra prediction based on the one or more sample values;
  ○ filtering intermediate reconstructed samples of the border region on the basis of one or both of the following:

    - the one or more sample values of the opposite side border region;

- the one or more variable values associated with the one or more blocks of the opposite side border region;

◦ tuning context-adaptive entropy coding on the basis of one or both of the following:

- the one or more sample values of an opposite side border region;
- the one or more variable values associated with one or more blocks of the opposite side border region.

According to a sixth aspect, there is provided an apparatus comprising at least one processor; at least one memory including computer program code, the at least one memory and the computer program code configured to, with the at least one processor, cause the apparatus to perform at least the following:

- decoding samples of a border region of a 360-degree panoramic picture, wherein the decoding comprises utilizing one or both of the following

  - one or more sample values of an opposite side border region:
  - one or more variable values associated with one or more blocks of the opposite side border region

  in processing of the samples of the border region;
- wherein said processing of the samples is one or both of the following: prediction of the samples of the border region, reconstruction of the samples of the border region, and wherein the processing comprises one or more of the following:

  ◦ obtaining a prediction block for intra prediction based on the one or more sample values;
  ◦ filtering intermediate reconstructed samples of the border region on the basis of one or both of the following:

  - the one or more sample values of the opposite side border region;
  - the one or more variable values associated with the one or more blocks of the opposite side border region;

  ◦ tuning context-adaptive entropy decoding on the basis of one or both of the following:

  - the one or more sample values of an opposite side border region;
  - the one or more variable values associated with one or more blocks of the opposite side border region.

According to a seventh aspect, there is provided an apparatus comprises

- means for processing;
- means for reconstructing a 360-degree panoramic source picture for inter-layer prediction;
- means for deriving an inter-layer reference picture from the 360-degree panoramic source picture, wherein the means for deriving is configured to perform one or both of

  ◦ upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region;
  ◦ determining a reference region that crosses a picture boundary of the 360-degree panoramic source picture, and including in the reference region one or both of the following:

  - one or more sample values of an opposite side border region;
  - one or more variable values associated with one or more blocks of the opposite side border region.

According to an eighth aspect, there is provided an apparatus comprises

- means for processing;
- means for encoding samples of a border region of a 360-degree panoramic picture, wherein the means for encoding is configured to utilize one or both of the following

  - one or more sample values of an opposite side border region:
  - one or more variable values associated with one or more blocks of the opposite side border region

in processing of the samples of the border region;

- wherein said processing of the samples is one or both of the following: prediction of the samples of the border region, reconstruction of the samples of the border region, and wherein the processing comprises one or more of the following:

  ○ obtaining a prediction block for intra prediction based on the one or more sample values;
  ○ filtering intermediate reconstructed samples of the border region on the basis of one or both of the following:

    ▪ the one or more sample values of the opposite side border region;
    ▪ the one or more variable values associated with the one or more blocks of the opposite side border region;

  ○ tuning context-adaptive entropy coding on the basis of one or both of the following:

    ▪ the one or more sample values of an opposite side border region;
    ▪ the one or more variable values associated with one or more blocks of the opposite side border region.

According to a ninth aspect, there is provided an apparatus comprises

- means for processing;
- means for decoding samples of a border region of a 360-degree panoramic picture, wherein the means for decoding is configured to utilize one or both of the following

  ▪ one or more sample values of an opposite side border region:
  ▪ one or more variable values associated with one or more blocks of the opposite side border region

  in processing of the samples of the border region;
- wherein said processing of the samples is one or both of the following: prediction of the samples of the border region, reconstruction of the samples of the border region, and wherein the processing comprises one or more of the following:

  ○ obtaining a prediction block for intra prediction based on the one or more sample values;
  ○ filtering intermediate reconstructed samples of the border region on the basis of one or both of the following:

    ▪ the one or more sample values of the opposite side border region;
    ▪ the one or more variable values associated with the one or more blocks of the opposite side border region;

  ○ tuning context-adaptive entropy decoding on the basis of one or both of the following:

    ▪ the one or more sample values of an opposite side border region;
    ▪ the one or more variable values associated with one or more blocks of the opposite side border region.

According to a tenth aspect, there is provided a computer program product comprising a computer-readable medium bearing computer program code embodied therein for use with a computer, the computer program code comprising:

- code for reconstructing a 360-degree panoramic source picture for inter-layer prediction;
- code for deriving an inter-layer reference picture from the 360-degree panoramic source picture, wherein the deriving comprises one or both of

  ○ code for upsampling at least a part of the 360-degree panoramic source picture, wherein said upsampling comprises filtering samples of a border region of the 360-degree panoramic source picture using at least partly one or more sample values of an opposite side border region and/or one or more variable values associated with one or more blocks of the opposite side border region;
  ○ code for determining a reference region that crosses a picture boundary of the 360-degree panoramic source picture, and including in the reference region one or both of the following:

    ▪ one or more sample values of an opposite side border region;
    ▪ one or more variable values associated with one or more blocks of the opposite side border region.

43

According to an eleventh aspect, there is provided a computer program product comprising a computer-readable medium bearing computer program code embodied therein for use with a computer, the computer program code comprising:

- code for encoding samples of a border region of a 360-degree panoramic picture, wherein the encoding comprises utilizing one or both of the following

  - one or more sample values of an opposite side border region:
  - one or more variable values associated with one or more blocks of the opposite side border region

  in processing of the samples of the border region;
- wherein said processing of the samples is one or both of the following: prediction of the samples of the border region, reconstruction of the samples of the border region, and wherein the processing comprises one or more of the following:

  o code for obtaining a prediction block for intra prediction based on the one or more sample values;
  o code for filtering intermediate reconstructed samples of the border region on the basis of one or both of the following:

  - the one or more sample values of the opposite side border region;
  - the one or more variable values associated with the one or more blocks of the opposite side border region;

  o code for tuning context-adaptive entropy coding on the basis of one or both of the following:

  - the one or more sample values of an opposite side border region;
  - the one or more variable values associated with one or more blocks of the opposite side border region.

According to a twelfth aspect, there is provided a computer program product comprising a computer-readable medium bearing computer program code embodied therein for use with a computer, the computer program code comprising:

- code for decoding samples of a border region of a 360-degree panoramic picture, wherein the decoding comprises utilizing one or both of the following

  - **one or more** sample values of an opposite side border region:
  - one or more variable values associated with one or more blocks of the opposite side border region

  in processing of the samples of the border region;
- wherein said processing of the samples is one or both of the following: prediction of the samples of the border region, reconstruction of the samples of the border region, and wherein the processing comprises one or more of the following:

  ◦ code for obtaining a prediction block for intra prediction based on the one or more sample values;
  ◦ code for filtering intermediate reconstructed samples of the border region on the basis of one or both of the following:

  - the one or more sample values of the opposite side border region;
  - the one or more variable values associated with the one or more blocks of the opposite side border region;

  ◦ code for tuning context-adaptive entropy decoding on the basis of one or both of the following:

  - the one or more sample values of an opposite side border region;
  - the one or more variable values associated with one or more blocks of the opposite side border region.

## Claims

1. A method comprising

- reconstructing a 360-degree panoramic source picture for inter-layer prediction;
- deriving a reference region for inter-layer prediction of a coding tree **unit** from the 360-degree panoramic source picture, wherein the deriving comprises:

 ◦ resampling at least a part of the 360-degree panoramic source picture, wherein said resampling comprises filtering samples of a border region of the 360-degree panoramic source picture using at least partly at least one sample value of an opposite side border region and/or at least one variable values associated with at least one block of the opposite side border region.

2. The method according to claim 1, further comprising at least one of the following:

- deriving a disparity value;
- setting syntax elements for the reference region left offset and right offset equal to the disparity value; and
- setting syntax elements for the reference region top offset and bottom offset equal to zero.

3. The method according to claim 2, further comprising deriving the disparity value from pictures of at least one access unit using at least one of the following:

- deriving an average disparity from at least one depth map associated with said pictures:
- deriving the disparity from camera parameters applying said pictures;
- deriving an average disparity between views, using a stereo matching algorithm;
- deriving an average disparity from inter-view motion vector applying between picture of different views.

4. The method according to any of the claims 1 to 3, further comprising at least one of the following:

- deriving an average disparity value for at least one picture;
- setting syntax elements for a scaled reference layer left offset and a scaled reference layer right offset equal to the average disparity value; and
- setting syntax element for a scaled reference layer top offset and a scaled reference layer bottom offset equal to zero.

5. The method according to any of the claims 1 to 4, further comprising;

 - creating two occurrences of a base-view picture in reference pictures lists, wherein first occurrence is a conventional inter-layer reference picture and the second occurrence is a resampled picture, and
 - optionally indicating the creation of the two occurrences in the bitstream.

6. An apparatus comprising at least one processor; at least one memory including computer program code, the at least one memory and the computer program code configured to, with the at least one processor, cause the apparatus to perform at least the following:

- to reconstruct a 360-degree panoramic source picture for inter-layer prediction;
- to derive a reference region for inter-layer prediction of a coding tree unit from the 360-degree panoramic source picture, wherein the deriving comprises

 ◦ resampling at least a part of the 360-degree panoramic source picture, wherein said resampling comprises filtering samples of a border region of the 360-degree panoramic source picture using at least partly at least one sample value of an opposite side border region and/or at least one variable value associated with at least one block of the opposite side border region.

7. The apparatus according to claim 6, further comprising computer program code configured to cause the apparatus to perform at least one of the following:

- to derive a disparity value;
- to set syntax elements for the reference region left offset and right offset equal to the disparity value; and
- to set syntax elements for the reference region top offset and bottom offset equal to zero.

8. The apparatus according to claim 7, further comprising computer program code configured to cause the apparatus to perform at least one the following: to derive the disparity value from pictures of one or more access unit by using one or more of the following:

- deriving an average disparity from at least one depth map associated with said pictures:
- deriving the disparity from camera parameters applying said pictures;
- deriving an average disparity between views, using a stereo matching algorithm;
- deriving an average disparity from inter-view motion vector applying between picture of different views.

9. The apparatus according to any of the previous claims 6 to 8, further comprising computer program code configured to cause the apparatus to perform at least one of the following:

- deriving an average disparity value for at least one picture;
- setting syntax elements for a scaled reference layer left offset and a scaled reference layer right offset equal to the average disparity value; and
- setting syntax element for a scaled reference layer top offset and a scaled reference layer bottom offset equal to zero.

10. The apparatus according to any of the previous claims 6 to 9, further comprising computer program code configured to cause the apparatus to perform at least the following:

- creating two occurrences of a base-view picture **in** reference pictures lists, wherein first occurrence is a conventional inter-layer reference picture and the second occurrence is a resampled picture, and
- optionally indicating the creation of the two occurrences in the bitstream.

11. A computer program product comprising a computer-readable medium bearing computer program code embodied therein for use with a computer, the computer program code comprising:

- code for reconstructing a 360-degree panoramic source picture for inter-layer prediction;
- code for deriving a reference region for inter-layer prediction of a coding tree unit from the 360-degree panoramic source picture, wherein the deriving comprises

  ∘ resampling at least a part of the 360-degree panoramic source picture, wherein said resampling comprises filtering samples of a border region of the 360-degree panoramic source picture using at least partly at least one sample value of an opposite side border region and/or at least one variable value associated with at least one block of the opposite side border region.

**Patentansprüche**

1. Verfahren, das Folgendes umfasst

- Rekonstruieren eines 360-Grad-Panoramaquellbildes für eine Zwischenschichtvorhersage;
- Ableiten einer Referenzregion für eine Zwischenschichtvorhersage einer Codierbaumeinheit aus dem 360-Grad-Panoramaquellbild, wobei das Ableiten Folgendes umfasst:

  ∘ Neuabtastung mindestens eines Teils des 360-Grad-Panoramaquellbildes, wobei die Neuabtastung eine Filterung von Abtastungen einer Grenzregion des 360-Grad-Panoramaquellbildes unter mindestens teilweiser Verwendung von mindestens einem Abtastwert einer Grenzregion auf einer gegenüberliegenden Seite und/oder von mindestens einem Variablenwert, die mit mindestens einem Block der Grenzregion der gegenüberliegenden Seite verknüpft sind.

2. Verfahren nach Anspruch 1, das ferner mindestens eines von Folgendem umfasst:

- Ableiten eines Disparitätswertes;
- Einstellen von Syntaxelementen für den linken Versatz und den rechten Versatz der Referenzregion auf den Disparitätswert; und
- Einstellen von Syntaxelementen für den oberen Versatz und den unteren Versatz der Referenzregion auf null.

3. Verfahren nach Anspruch 2, das ferner das Ableiten des Disparitätswertes aus Bildern von mindestens einer Zugangseinheit unter Verwendung von mindestens einem von Folgendem umfasst:

- Ableiten einer durchschnittlichen Disparität aus mindestens einer Tiefenkarte, die mit den Bildern verknüpft ist:
- Ableiten der Disparität aus Kameraparametern, die die Bilder anwenden;
- Ableiten einer durchschnittlichen Disparität zwischen Ansichten unter Verwendung eines Stereoabgleichalgorithmus;
- Ableiten einer durchschnittlichen Disparität aus einem Zwischenansichtsbewegungsvektor, der zwischen einem Bild verschiedener Ansichten angewandt wird.

4. Verfahren nach einem der Ansprüche 1 bis 3, das ferner mindestens eines von Folgendem umfasst:

- Ableiten eines durchschnittlichen Disparitätswertes für mindestens ein Bild;
- Einstellen von Syntaxelementen für einen linken Versatz einer skalierten Referenzschicht und einen rechten Versatz einer skalierten Referenzschicht auf den durchschnittlichen Disparitätswert; und
- Einstellen eines Syntaxelements für einen oberen Versatz einer skalierten Referenzschicht und einen unteren Versatz einer skalierten Referenzschicht auf null.

5. Verfahren nach einem der Ansprüche 1 bis 4, das ferner Folgendes umfasst;

- Erstellen von zwei Vorkommen eines Basisansichtsbildes in Referenzbildlisten, wobei ein erstes Vorkommen ein konventionelles Zwischenschichtreferenzbild ist und das zweite Vorkommen ein neu abgetastetes Bild ist, und
- wahlweise Anzeigen der Erstellung der zwei Vorkommen im Bitstrom.

6. Vorrichtung, die mindestens einen Prozessor; mindestens einen Speicher umfasst, der Computerprogrammcode beinhaltet, wobei der mindestens eine Speicher und der Computerprogrammcode dazu ausgelegt sind, die Vorrichtung mit dem mindestens einen Prozessor zu veranlassen, mindestens Folgendes durchzuführen:

- Rekonstruieren eines 360-Grad-Panoramaquellbildes für eine Zwischenschichtvorhersage;
- Ableiten einer Referenzregion für eine Zwischenschichtvorhersage einer Codierbaumeinheit aus dem 360-Grad-Panoramaquellbild, wobei das Ableiten Folgendes umfasst

  ∘ Neuabtastung mindestens eines Teils des 360-Grad-Panoramaquellbildes, wobei die Neuabtastung eine Filterung von Abtastungen einer Grenzregion des 360-Grad-Panoramaquellbildes unter mindestens teilweiser Verwendung von mindestens einem Abtastwert einer Grenzregion auf einer gegenüberliegenden Seite und/oder von mindestens einem Variablenwert, der mit mindestens einem Block der Grenzregion der gegenüberliegenden Seite verknüpft ist.

7. Vorrichtung nach Anspruch 6, die ferner Computerprogrammcode umfasst, der dazu ausgelegt ist, die Vorrichtung zu veranlassen, mindestens eines von Folgendem durchzuführen:

- Ableiten eines Disparitätswertes;
- Einstellen von Syntaxelementen für den linken Versatz und den rechten Versatz der Referenzregion auf den Disparitätswert; und
- Einstellen von Syntaxelementen für den oberen Versatz und den unteren Versatz der Referenzregion auf null.

8. Vorrichtung nach Anspruch 7, die ferner Computerprogrammcode umfasst, der dazu ausgelegt ist, die Vorrichtung zu veranlassen, mindestens eines von Folgendem durchzuführen: Ableiten des Disparitätswertes aus Bildern von einer oder mehreren Zugangseinheiten unter Verwendung von einem oder mehreren von Folgendem:

- Ableiten einer durchschnittlichen Disparität aus mindestens einer Tiefenkarte, die mit den Bildern verknüpft ist:
- Ableiten der Disparität aus Kameraparametern, die die Bilder anwenden;
- Ableiten einer durchschnittlichen Disparität zwischen Ansichten unter Verwendung eines Stereoabgleichalgorithmus;
- Ableiten einer durchschnittlichen Disparität aus einem Zwischenansichtsbewegungsvektor, der zwischen einem Bild verschiedener Ansichten angewandt wird.

**9.** Vorrichtung nach einem der vorhergehenden Ansprüche 6 bis 8, die ferner Computerprogrammcode umfasst, der dazu ausgelegt ist, die Vorrichtung zu veranlassen, mindestens eines von Folgendem durchzuführen:

- Ableiten eines durchschnittlichen Disparitätswertes für mindestens ein Bild;
- Einstellen von Syntaxelementen für einen linken Versatz einer skalierten Referenzschicht und einen rechten Versatz einer skalierten Referenzschicht auf den durchschnittlichen Disparitätswert; und
- Einstellen von Syntaxelementen für einen oberen Versatz einer skalierten Referenzschicht und einen unteren Versatz einer skalierten Referenzschicht auf null.

**10.** Vorrichtung nach einem der vorhergehenden Ansprüche 6 bis 9, die ferner Computerprogrammcode umfasst, der dazu ausgelegt ist, die Vorrichtung zu veranlassen, mindestens Folgendes durchzuführen:

- Erstellen von zwei Vorkommen eines Basisansichtsbildes in Referenzbildlisten, wobei ein erstes Vorkommen ein konventionelles Zwischenschichtreferenzbild ist und das zweite Vorkommen ein neu abgetastetes Bild ist, und
- wahlweise Anzeigen der Erstellung der zwei Vorkommen im Bitstrom.

**11.** Computerprogrammprodukt, das ein computerlesbares Medium umfasst, auf dem sich Computerprogrammcode zur Verwendung mit einem Computer befindet, wobei der Computerprogrammcode Folgendes umfasst:

- Code zum Rekonstruieren eines 360-Grad-Panoramaquellbildes für eine Zwischenschichtvorhersage;
- Code zum Ableiten einer Referenzregion für eine Zwischenschichtvorhersage einer Codierbaumeinheit aus dem 360-Grad-Panoramaquellbild, wobei das Ableiten Folgendes umfasst

∘ Neuabtastung mindestens eines Teils des 360-Grad-Panoramaquellbildes, wobei die Neuabtastung eine Filterung von Abtastungen einer Grenzregion des 360-Grad-Panoramaquellbildes unter mindestens teilweiser Verwendung von mindestens einem Abtastwert einer Grenzregion auf einer gegenüberliegenden Seite und/oder von mindestens einem Variablenwert, der mit mindestens einem Block der Grenzregion der gegenüberliegenden Seite verknüpft ist.

**Revendications**

**1.** Procédé comprenant

- la reconstruction d'une image source panoramique à 360 degrés pour une prédiction inter-couche ;
- la dérivation d'une région de référence pour la prédiction inter-couche d'une unité d'arbre de codage à partir de l'image source panoramique à 360 degrés, dans lequel la dérivation comprend :

∘ le rééchantillonnage d'au moins une partie de l'image source panoramique à 360 degrés, dans lequel ledit rééchantillonnage comprend le filtrage d'échantillons d'une région frontalière de l'image source panoramique à 360 degrés en utilisant au moins partiellement au moins une valeur d'échantillon d'une région frontalière du côté opposé et/ou au moins une valeur variable associée à au moins un bloc de la région frontalière du côté opposé.

**2.** Procédé selon la revendication 1, comprenant en outre au moins l'une des opérations suivantes :

- dériver une valeur de disparité ;
- définir des éléments de syntaxe pour le décalage gauche et le décalage droit de la région de référence qui sont égaux à la valeur de disparité ; et
- définir des éléments de syntaxe pour le décalage en haut et le décalage en bas de la région de référence qui sont égaux à zéro.

**3.** Procédé selon la revendication 2, comprenant en outre la dérivation de la valeur de disparité à partir d'images d'au moins une unité d'accès par au moins l'une des opérations suivantes :

- dériver une disparité moyenne à partir d'au moins une carte de profondeur associée auxdites images :
- dériver la disparité à partir de paramètres de caméra s'appliquant auxdites images ;

- dériver une disparité moyenne entre les vues en utilisant un algorithme de concordance stéréo ;
- dériver une disparité moyenne à partir d'un vecteur de mouvement inter-vues s'appliquant entre des images de vues différentes.

4. Procédé selon l'une des revendications 1 à 3, comprenant en outre au moins l'une des opérations suivantes :

- dériver une valeur de disparité moyenne pour au moins une image ;
- définir des éléments de syntaxe pour un décalage gauche de couche de référence mis à l'échelle et un décalage droit de couche de référence mis à l'échelle qui sont égaux à la valeur de disparité moyenne ; et
- définir un élément de syntaxe pour un décalage en haut de couche de référence mis à l'échelle et un décalage en bas de couche de référence mis à l'échelle qui sont égaux à zéro.

5. Procédé selon l'une des revendications 1 à 4, comprenant en outre ;

- la création de deux occurrences d'une image de visualisation de base dans des listes d'images de référence, dans lequel la première occurrence est une image de référence inter-couche et la deuxième occurrence est une image rééchantillonnée, et
- facultativement, l'indication de la création des deux occurrences dans le train de bits.

6. Appareil comprenant au moins un processeur ; au moins une mémoire comportant un code de programme informatique, l'au moins une mémoire et le code de programme informatique étant configurés pour, avec l'au moins un processeur, amener l'appareil à effectuer au moins les opérations suivantes :

- reconstruire une image source panoramique à 360 degrés pour une prédiction inter-couche ;
- dériver une région de référence pour la prédiction inter-couche d'une unité d'arbre de codage à partir de l'image source panoramique à 360 degrés, dans lequel la dérivation comprend

  ∘ le rééchantillonnage d'au moins une partie de l'image source panoramique à 360 degrés, dans lequel ledit rééchantillonnage comprend le filtrage d'échantillons d'une région frontalière de l'image source panoramique à 360 degrés en utilisant au moins partiellement au moins une valeur d'échantillon d'une région frontalière du côté opposé et/ou au moins une valeur variable associée à au moins un bloc de la région frontalière du côté opposé.

7. Appareil selon la revendication 6, comprenant en outre un code de programme informatique configuré pour amener l'appareil à effectuer au moins l'une des opérations suivantes :

- dériver une valeur de disparité ;
- définir des éléments de syntaxe pour le décalage gauche et le décalage droit de la région de référence qui sont égaux à la valeur de disparité ; et
- définir des éléments de syntaxe pour le décalage en haut et le décalage en bas de la région de référence qui sont égaux à zéro.

8. Appareil selon la revendication 7, comprenant en outre un code de programme informatique configuré pour amener l'appareil à effectuer au moins l'une des opérations suivantes : dériver la valeur de disparité à partir d'images d'une ou plusieurs unités d'accès par une ou plusieurs des opérations suivantes :

- dériver une disparité moyenne à partir d'au moins une carte de profondeur associée auxdites images :
- dériver la disparité à partir de paramètres de caméra s'appliquant auxdites images ;
- dériver une disparité moyenne entre les vues en utilisant un algorithme de concordance stéréo ;
- dériver une disparité moyenne à partir d'un vecteur de mouvement inter-vues s'appliquant entre des images de vues différentes.

9. Appareil selon l'une des revendications précédentes 6 à 8, comprenant en outre un code de programme informatique configuré pour amener l'appareil à effectuer au moins l'une des opérations suivantes :

- dériver une valeur de disparité moyenne pour au moins une image ;
- définir des éléments de syntaxe pour un décalage gauche de couche de référence mis à l'échelle et un décalage droit de couche de référence mis à l'échelle qui sont égaux à la valeur de disparité moyenne ; et

- définir un élément de syntaxe pour un décalage en haut de couche de référence mis à l'échelle et un décalage en bas de couche de référence mis à l'échelle qui sont égaux à zéro.

10. Appareil selon l'une des revendications précédentes 6 à 9, comprenant en outre un code de programme informatique configuré pour amener l'appareil à effectuer au moins l'une des opérations suivantes :

 - créer deux occurrences d'une image de visualisation de base dans des listes d'images de référence, dans lequel la première occurrence est une image de référence inter-couche et la deuxième occurrence est une image rééchantillonnée, et
 - facultativement, indiquer la création des deux occurrences dans le train de bits.

11. Produit de programme informatique comprenant un support lisible par ordinateur portant un code de programme informatique incorporé dans celui-ci pour son utilisation par un ordinateur, le code de programme informatique comprenant :

 - un code pour reconstruire une image source panoramique à 360 degrés pour une prédiction inter-couche ;
 - un code pour dériver une région de référence pour la prédiction inter-couche d'une unité d'arbre de codage à partir de l'image source panoramique à 360 degrés, dans lequel la dérivation comprend

  ◦ le rééchantillonnage d'au moins une partie de l'image source panoramique à 360 degrés, dans lequel ledit rééchantillonnage comprend le filtrage d'échantillons d'une région frontalière de l'image source panoramique à 360 degrés en utilisant au moins partiellement au moins une valeur d'échantillon d'une région frontalière du côté opposé et/ou au moins une valeur variable associée à au moins un bloc de la région frontalière du côté opposé.

Fig. 1

Fig. 2

EP 3 354 029 B1

Fig. 3

Fig. 4

Fig. 5

610

620

x
y

Fig. 6

Fig. 7

Fig. 8

Fig. 9

EP 3 354 029 B1

1030

scaled_ref_layer_top_offset

scaled_ref_layer_left_offset

1010

scaled_ref_layer_right_offset

scaled_ref_layer_bottom_offset

1020

Fig. 10

Fig. 11

$R_{0,0}$ | $R_{1,0}$ | $R_{2,0}$ | $\cdots$ | $R_{N,0}$ | $R_{N+1,0}$ | $\cdots$ | $R_{2N,0}$

$R_{0,1}$ | $P_{1,1}$ | $P_{2,1}$ | $\cdots$ | $P_{N,1}$

$R_{0,2}$ | $P_{1,2}$

$\vdots$ | $\vdots$

$R_{0,N}$ | $P_{1,N}$ | $\cdots$ | $P_{N,N}$

$R_{0,N+1}$

$\vdots$

$R_{0,2N}$

Fig. 12

Reconstructing a 360-degree panoramic source picture for inter-layer prediction

Deriving an inter-layer reference picture from the 360-degree panoramic source picture, wherein the deriving comprises one or both of the following:

Determining a reference region that crosses a picture boundary of the 360-degree panoramic source picture, and including in the reference region:
- one or more sample values of an opposite side border region, or
- one or more variable values associated with one or more blocks of the opposite side border region, or
- both

Upsampling at least part of the 360-degree panoramic source picture, comprising filtering samples of a border region of the 360-degree panoramic source picture using at least partly one or more sample values of an opposite border region and/or one or more variable values associated with one more blocks of the opposite side border region

Fig. 13

Obtaining a prediction block for intra prediction based on the one or more sample values

Encoding samples of a border region of a 360-degree panoramic picture using
- one or more sample values of an opposite side border region, or
- one or more variable values associated with one or more blocks of the opposite side border region, or
- both
in processing of the samples of the border region, wherein processing is
- prediction of the samples of the border region, or
- reconstruction of the samples of the border region, or
- both,
and wherein the processing comprises one or more of the following

Tuning context-adaptive entropy coding on the basis of
- the one or more sample values of an opposite side border region, or
- the one or more variable values associated with one or more blocks of the opposite side border region, or
- both

Filtering intermediate reconstructed samples of the border region on the basis of
- one or more sample values of the opposite side border region, or
- one or more variable values associated with the one or more blocks of the opposite side border region, or
- both

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006034374 A1, PARK GWANG-HOON

**Non-patent literature cited in the description**

- **CHEN L. et al.** Disparity-compensated Inter-layer Motion Prediction Using Standardized HEVC Extensions. *IEEE INTERNATIONAL SYMPOSIUM ON CIRCUITS AND SYSTEMS (ISCAS*, 24 May 2015, 2776-2779